# FASCICULE DE BREVET EUROPEEN

(11) **EP 3 110 927 B1**
(45) Date de publication et mention de la délivrance du brevet: **30.03.2022**
(21) Numéro de dépôt: 15704802.6
(22) Date de dépôt: 17.02.2015
(51) Int. Cl.: C10L 1/14, C10L 1/19, C10L 1/222, C10L 1/232, C10L 10/18, C10L 1/2387

(54) **COMPOSITION D'ADDITIFS ET CARBURANT DE PERFORMANCE COMPRENANT UNE TELLE COMPOSITION**
ZUSAMMENSETZUNG VON ADDITIVEN UND LEISTUNGSKRAFTSTOFF UMFASSEND SOLCH EINE ZUSAMMENSETZUNG
COMPOSITION OF ADDITIVES AND PERFORMANCE FUEL COMPRISING SUCH A COMPOSITION

(30) Priorité: 24.02.2014 FR 1451438
(43) Date de publication de la demande: 04.01.2017
(73) Titulaire: Total Marketing Services, 92800 Puteaux (FR)
(72) Inventeur: PAPIN, Géraldine, F-69007 Lyon (FR); DUBOIS, Thomas, F-69008 Lyon (FR); GUEIT, Julien, F-69002 Lyon (FR)
(74) Mandataire: Casalonga
(86) Numéro de dépôt international: PCT/EP2015/053326
(87) Numéro de publication internationale: WO 2015/124575

(56) Documents cités:
- WO-A1-2011/110860
- WO-A1-2013/120985
- WO-A2-2006/135881
- US-A- 4 257 779
- US-A- 4 282 007
- US-A- 4 604 102
- US-A- 5 993 498
- US-A1- 2008 052 985
- US-A1- 2008 113 890
- US-A1- 2012 010 112

## Description

### ETAT DE L'ART

La présente invention concerne des compositions d'additifs et les carburants contenant de telles compositions d'additifs. L'objet de la présente invention concerne en particulier des compositions d'additifs pour carburant gazole et/ou biogazole. Un autre objet de la présente invention concerne l'utilisation de tels carburants dans les moteurs Diesel pour améliorer leurs performances, notamment dans les moteurs Diesel avec système d'injection de carburant de type Euro 3 à Euro 6.

Les carburants commercialisés doivent respecter des spécifications nationales ou supranationales (par exemple la norme EN 590 pour les carburants diesel dans l'UE). Pour les carburants commerciaux, il n'existe aucune obligation légale concernant l'incorporation d'additifs. Du point de vue commercial, dans le domaine de la distribution des carburants, on distingue les carburants « premier prix », pas ou peu additivés, des carburants de qualité supérieure dans lesquels sont incorporés un ou plusieurs additifs pour en améliorer les performances (au-delà des performances réglementaires).

La teneur en soufre des carburants gazole a fait l'objet d'une réduction très importante dans de nombreux pays pour des raisons d'environnement, notamment pour réduire les émissions de SO₂. Par exemple, en Europe, la teneur maximale en soufre des carburants de type gazole routier est actuellement de 10 ppm massiques. Pour compenser la perte de composés assurant le caractère lubrifiant de ces carburants, de nombreux additifs de lubrifiance et/ou anti-usure et/ou modificateur de frottement ont été introduits dans les carburants commercialisés. Leurs caractéristiques sont largement décrites dans les brevets EP915944, EP839174 et EP680506.

### DESSINS

- la figure 1 est une photographie d'un injecteur de moteur Diesel à injection directe haute pression
- la figure 2 est une photographie d'une aiguille d'un injecteur de moteur Diesel à injection directe, encrassée par dépôt de type savon et/ou vernis (en anglais « lacquering »)
- la figure 3 est une photographie d'une buse d'un injecteur de moteur Diesel à injection indirecte, encrassée par dépôt de type cokage (en anglais « coking »)
- la figure 4 est une photographie d'une aiguille d'un injecteur de moteur Diesel à injection directe, encrassée par dépôt de type savon et/ou vernis (en anglais « lacquering »)

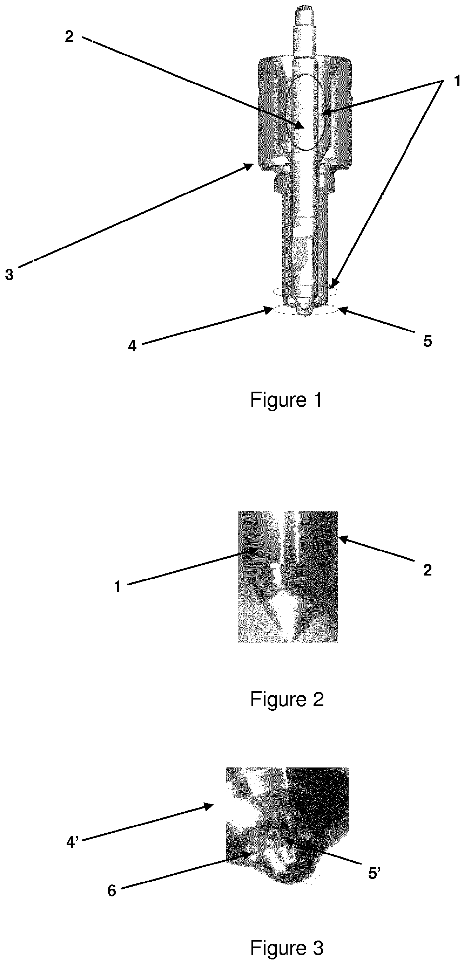

Comme représenté aux figures 1 et 2, on a constaté que lors de l'utilisation de certains carburants gazole de qualité supérieure, des dépôts 1 apparaissaient sur les aiguilles 2 d'injecteur 3 des systèmes d'injection de moteurs Diesel, notamment ceux de type Euro 3 à Euro 6. Ainsi, l'utilisation d'additifs anti-usure et/ou modificateur de frottement et/ou anti-dépôts de type cokage ont parfois présenté une résistance au lacquering non satisfaisante, voire très insuffisante. Ceci se traduit par la formation de dépôt 1 généralement couvert par le terme anglais de lacquering qui sera utilisé dans tout ce qui suit ou sous l'acronyme anglais IDID (Internal Diesel Injector Deposits).

Au sens de la présente invention, le phénomène de lacquering ne concerne pas les dépôts qui sont présents à l'extérieur du système d'injection 5 ou 5' (figure 1 et 3) et qui sont liés à du cokage (« coking » en anglais) à l'origine de l'encrassement et du bouchage partiel ou total des buses d'injection 4 ou 4' (« nozzle coking » ou « fouling » en anglais).

Le lacquering et le cokage sont deux phénomènes bien distincts tant par les causes de ces dépôts, les conditions d'apparition de ces dépôts et le lieu où se produisent ces dépôts. Le cokage est un phénomène qui apparait uniquement en aval d'un système d'injection Diesel.

Comme représenté à la figure 3, les dépôts 5' formés se caractérisent en ce qu'ils sont constitués par pyrolyse des hydrocarbures entrant dans la chambre à combustion et ont l'aspect de dépôts charbonneux. Dans le cas des motorisations Diesel à injection directe haute pression, il a été constaté que la tendance au cokage est nettement moins marquée. Ce cokage est simulé classiquement par l'essai moteur standard CEC F098-08 DW10B, en particulier lorsque le carburant testé est contaminé par du zinc métallique.

Dans le cas des moteurs à injection indirecte, la combustion du carburant ne se fait pas directement dans la chambre de combustion comme pour les moteurs à injection directe. Comme décrit par exemple dans le document US4604102, il existe une pré-chambre avant la chambre de combustion dans laquelle s'effectue l'injection du carburant. La pression et la température dans une pré-chambre sont inférieures à celles d'une chambre à combustion de moteurs à injection directe. Dans ces conditions, la pyrolyse du carburant produit du charbon qui se dépose à la surface des buses 4' des injecteurs (« throttling diesel nozzle en anglais » et bouche les orifices 6 des buses 4' (figure 3). Seules les surfaces de la buse 4' exposées aux gaz de combustion présentent un risque de dépôt de charbon (cokage).En termes de performance, le phénomène de coking induit une perte de puissance moteur. Le lacquering est un phénomène qui apparait uniquement dans les moteurs Diesel à injection directe et ne se produit que dans le système d'injection.

Comme représenté aux figures 1 et 2, les injecteurs 3 de moteurs Diesel à injection directe comprennent une aiguille 2 dont la levée permet de contrôler précisément la quantité de carburant injectée à haute pression directement dans la chambre à combustion. Le lacquering induit l'apparition de dépôts 1 qui apparaissent spécifiquement au niveau des aiguilles 2 des injecteurs 3 (figures 1 et 2). Le phénomène de lacquering est lié à la formation de savon et/ou de vernis dans les parties internes des systèmes d'injection des moteurs pour carburants de type gazole et/ou biogazole. Le dépôt lacquering 1 peut être localisé sur l'extrémité 4 des aiguilles 2 d'injecteurs 3, à la fois sur la tête et sur le corps des aiguilles 2 du système d'injection du carburant mais aussi dans tout le système de commande de la levée d'aiguilles (clapets non représentés) du système d'injection. Ce phénomène est particulièrement notable pour les moteurs utilisant des carburants gazole de qualité supérieure. Lorsque ces dépôts sont présents en quantité importante, la mobilité de l'aiguille 2 de l'injecteur 3 encrassée par ces dépôts 1 est compromise. En outre, contrairement au cokage, le lacquering peut également provoquer une augmentation du bruit du moteur et parfois des problèmes de démarrage. En effet, les parties des aiguilles 2 encrassées par les dépôts de savon et/ou de vernis 1 peuvent coller aux parois internes de l'injecteur 3. Les aiguilles 2 sont alors bloquées et le carburant ne passe plus.

On distingue en général 2 types de dépôts de type lacquering :
1. des dépôts plutôt blanchâtres et pulvérulents ; par analyse, on constate que ces dépôts consistent essentiellement en des savons de sodium (carboxylates de sodium, par exemple) et/ou de calcium (dépôts de type 1) ;
2. des dépôts organiques assimilables à des vernis colorés localisés sur le corps de l'aiguille (dépôts de type 2)

Pour ce qui concerne les dépôts de type 1, les sources de sodium dans les carburants biogazole de type Bx peuvent être multiples :
- les catalyseurs de transestérification des huiles végétales pour la production des esters de type esters (m)éthyliques d'acides gras tel que le méthanoate de sodium ;
- le sodium peut aussi provenir des inhibiteurs de corrosion utilisés pour le transport de produits pétroliers dans certains pipes, tel que le nitrite de sodium ;
- enfin des pollutions exogènes accidentelles, via l'eau ou l'air par exemple, peuvent contribuer à introduire du sodium dans les carburants (le sodium étant un élément très répandu).

Les sources possibles d'acides dans les carburants contenant des biogazoles peuvent être multiples, par exemple :
o les acides résiduels des biocarburants (voir la norme EN14214 qui fixe un taux maximal d'acides autorisé)
o les inhibiteurs de corrosion utilisés pour le transport de produits pétroliers dans certains pipes tels que le DDSA (anhydride dodécénylsuccinique) ou le HDSA (anhydride hexadécénylsuccinique) ou certains de leurs dérivés fonctionnels tels que les acides.

Pour ce qui concerne les dépôts organiques de type 2, certaines publications précisent qu'ils peuvent notamment provenir de réactions entre des réducteurs de dépôts/dispersants utilisés pour prévenir le cokage (par exemple les détergents de type PIBSI dérivés des polyamines) et les acides (qui seraient présents entre autres en tant qu'impuretés des esters d'acides gras du biogazole).

Dans la publication SAE 880493, *Reduced Injection Needle Mobility Caused by Lacquer Deposits from Sunflower Oil*, les auteurs M Ziejewski et HJ Goettler décrivent le phénomène de lacquering et ses conséquences néfastes pour le fonctionnement de moteurs fonctionnant avec des huiles de tournesol comme carburant.

Dans la publication SAE 2008-01-0926, Investigation into the Formation and Prevention of Internal Diesel Injector Deposits, les auteurs J Ullmann, M Geduldig, H Stutzenberger (Robert Bosch GmbH) et R Caprotti, G Balfour (Infineum) décrivent aussi les réactions entre les acides et les réducteurs de dépôts/dispersants pour expliquer les dépôts de type 2.

Par ailleurs, dans la publication SAE International, 2010-01-2242, Internal Injector Deposits in High-Pressure Common Rail Diesel Engines, les auteurs S. Schwab, J. Bennett, S. Dell, JGalante-Fox, AKulinowski et Keith T. Miller expliquent que les parties internes des injecteurs sont généralement recouvertes par un dépôt légèrement coloré et visible à l'œil nu. Leurs analyses ont permis de déterminer qu'il s'agissait majoritairement de sels de sodium d'acides alkényl- (hexadécényl- ou dodécényl-)-succiniques ; le sodium provenant de desséchants, d'eau caustique utilisée en raffinerie, d'eau de fonds de bacs ou d'eau de mer, et les diacides succiniques étant utilisés comme inhibiteurs de corrosion ou présents dans les paquets multifonctionnels d'additifs. Une fois formés, ces sels sont insolubles dans les carburants Diesel à basse teneur en soufre, et comme ils existent sous forme de fines particules, ils passent au travers des filtres gazole et viennent se déposer à l'intérieur des injecteurs. Dans cette publication, le développement d'un essai moteur est décrit et permet de reproduire les dépôts. Dans la publication SAE International, 2010-01-2250, Deposit Control in Modern Diesel Fuel Injection System, les auteurs, R.Caprotti, N. Bhatti and G. Balfour, étudient aussi le même type de dépôts internes dans les injecteurs et affirment que l'apparition de dépôts n'est pas liée spécifiquement à un type de carburant (gazole ou contenant des biogazoles)) ni à un type de véhicules (véhicules légers ou poids lourds) équipés de motorisations modernes (common rail). Ils montrent la performance d'un nouveau réducteur de dépôts/dispersant, efficace sur tous types de dépôts (coking et lacquering).

L'accumulation des dépôts de type lacquering tels que décrits ci-dessus peut entraîner les inconvénients suivants :
- un ralentissement de la réponse de l'injecteur de carburant,
- le collage des pièces internes, ce qui peut entraîner une perte de contrôle du temps d'injection ainsi que de la quantité de carburant fournie par injection,
- une dégradation de l'agrément de conduite du véhicule,
- des variations de puissance,
- une augmentation de la consommation de carburant,
- une augmentation des polluants,
- une perturbation de la combustion, puisque la quantité de carburant injectée ne sera pas celle prévue en théorie et le profil de l'injection sera différent,
- un ralenti instable du véhicule,
- une augmentation du bruit produit par le moteur,
- une baisse de la qualité de la combustion sur le long terme,
- une baisse de la qualité de la pulvérisation.

Dans le cas où il y aurait un fort dépôt de type lacquering, le véhicule pourrait avoir de grandes difficultés à démarrer, voire ne plus démarrer du tout, puisque l'aiguille permettant l'injection serait bloquée.

### OBJET DE L'INVENTION

La présente invention est décrite dans et par les revendications annexées.

La présente invention permet de surmonter les inconvénients indiqués ci-dessus.

Dans le cadre de ses recherches, la demanderesse a montré que la combinaison de trois additifs particuliers permettait d'obtenir un effet synergique surprenant notamment pour le contrôle des dépôts sur les injecteurs.

La présente invention propose des compositions d'additifs susceptibles d'améliorer de manière tangible le contrôle des dépôts, notamment de type lacquering de carburants gazole et/ou biogazole. La présente invention vise également des compositions d'additifs améliorant également le contrôle des dépôts de type coking et/ou les propriétés lubrifiantes du carburant gazole et/ou biogazole.

La présente invention vise une composition d'additifs pour carburant telle que décrite dans les revendications annexées.

Selon un mode de réalisation particulier, l'agent de quaternarisation est choisi parmi le groupe constitué par les dialkyle sulfates, les esters d'acide carboxylique, les halogénures d'alkyle, les halogénures de benzyle, les carbonates hydrocarbonés et les époxydes hydrocarbonés éventuellement en mélange avec un acide, seuls ou en mélange.

Selon un autre mode de réalisation particulier, le composé azoté comprend un produit de réaction d'un agent d'acylation substitué par un groupement hydrocarboné et d'une amine de formule (I) ou (II) suivante :

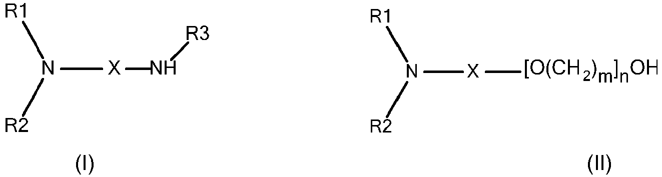

Dans laquelle :
R₁ et R₂ sont identiques ou différents et représentent, indépendamment l'un de l'autre, un groupement alkyle ayant de 1 à 22 atomes de carbone ;
X est un groupement alkylène ayant de 1 à 20 atomes de carbone ;
m est un nombre entier compris entre 1 et 5 ;
n est un nombre entier compris entre 0 et 20 ; et
R₃ est un atome d'hydrogène ou un groupement alkyle ayant de 1 à 22 atomes de carbone.

Le composé A est obtenu par estérification entre :
- un ou de plusieurs acide(s) gras en C₄ à C₃₆ comprenant éventuellement une ou plusieurs liaisons éthyléniques ; et
- un polyol, linéaire ou ramifié, cyclique ou acyclique comprenant éventuellement un hétérocycle de 5 à 6 atomes, de préférence un hétérocycle de 4 à 5 atomes de carbone et un atome d'oxygène, substitué par des groupements hydroxyle.

Selon un développement, les acides gras sont choisis parmi le groupe constitué par les acides stéarique, isostéarique, linolénique, oléique, linoléique, béhénique, arachidonique, ricinoléique, palmitique, myristique, laurique, caprique, pris seuls ou en mélange.

Selon un développement, le polyol est choisi parmi les polyols comprenant plus de trois fonctions hydroxyle et les polyols comprenant au moins un hétérocycle de 5 ou 6 atomes, préférence des hétérocycles de 4 à 5 atomes de carbone et un atome d'oxygène, éventuellement substitué par des groupements hydroxyle. En particulier, le polyol est choisi parmi les polyols comprenant au moins deux hétérocycles de 4 ou 5 atomes de carbone et d'un atome d'oxygène, reliés par la formation d'une liaison acétal entre une fonction hydroxyle de chaque cycle, lesdits hétérocycles étant éventuellement substitués par des groupements hydroxyle. Selon un développement, le polyol est choisi parmi le groupe consistant en l'érythritol, le xylitol, l'arabitol, le ribitol, le sorbitol, le maltitol, l'isomaltitol, le lactitol, le volemitol, le mannitol, le pentaérythritol, le 2-hydroxyméthyl-1,3-propandediol, le 1,1,1- tri(hydroxyméthyl)éthane, le triméthylolpropane, le sorbitan et les glucides comme le sucrose, le fructose, le maltose, le glucose et le saccharose.

Selon l'invention, le composé A est choisi parmi les esters partiels de sorbitan, de préférence les mono-, di- et tri-esters de sorbitan, pris seuls ou en mélange, plus préférentiellement les esters partiels de sorbitan comprenant plus de 40% massique de triesters de sorbitan.

Selon un mode de réalisation non conforme à l'invention, le composé A est choisi parmi les monoester(s) et/ou diester(s) de polyglycérols ayant de 2 à 5 motifs glycérol par molécule. En particulier, le composé A est choisi parmi les monoester(s) et/ou diester(s) de polyglycérols dérivés d'acide(s) gras, ayant plus de 50 % en nombre des chaînes grasses comprenant entre 12 et 24 atomes de carbone, de préférence, le composé A est choisi parmi les monoester(s) et/ou diester(s) de diglycérol et/ou de triglycérol, plus préférentiellement, parmi les esters partiels de diglycérol et/ou de triglycérol comprennant au moins 50 % massique de monoester et/ou de diester(s) d'acide oléique et de diglycérol.

Selon un développement, la composition d'additifs comprend un troisième additif comprenant un dérivé de triazole de formule (V) suivante :

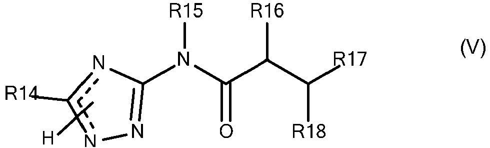

Dans laquelle :
- R₁₄ est choisi parmi le groupe consistant en un atome d'hydrogène, un groupement hydrocarboné aliphatique en C₁ à C₈, linéaire ou ramifié, un groupement carboxyle (-CO₂H),
- R₁₅ et R₁₈ sont identiques ou différents et représentent, indépendamment l'un de l'autre, un groupement choisi parmi le groupe consistant en un atome d'hydrogène et un groupement hydrocarboné aliphatique en C₁ à C₃₃, linéaire ou ramifié, saturé ou insaturé, comprenant éventuellement un ou plusieurs atomes d'oxygène sous forme de fonction carbonyle (-CO-) et/ou carboxyle (-CO₂H), lesdits groupements R₁₅ et R₁₈ formant éventuellement ensemble un cycle de 5 à 8 atomes comprenant l'azote auquel R₁₅ est lié, étant entendu que dans ce cas R₁₅ et R₁₈ constituent alors un seul et même groupement hydrocarboné aliphatique en C₁ à C₃₃, linéaire ou ramifié, saturé ou insaturé, éventuellement substitué par un ou plusieurs atomes d'oxygène sous forme d'une fonction carbonyle (-CO-) et/ou carboxyle (-CO₂H),

- R₁₆ et R₁₇ sont identiques ou différents et représentent, indépendamment l'un de l'autre, un groupement choisi parmi le groupe consistant en un atome d'hydrogène et un groupement hydrocarboné aliphatique, linéaire ou ramifié, saturé ou insaturé, cyclique ou acyclique ayant de 2 à 200 atomes de carbones.

Avantageusement, le dérivé de triazole a la formule (V) dans laquelle R₁₆ et R₁₇ sont identiques ou différents et représentent, indépendamment l'un de l'autre, un groupement choisi parmi le groupe consistant en un atome d'hydrogène et un groupement hydrocarboné aliphatique ayant une masse moléculaire moyenne en nombre (Mn) comprise entre 200 et 3000.

Selon un mode de réalisation particulier, le dérivé de triazole est représenté par la formule (VI) et/ou (VII) suivante (s) :

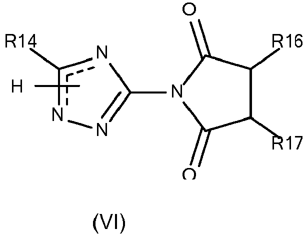

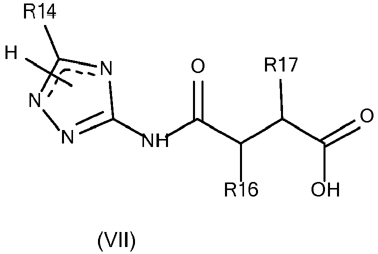

Dans laquelle R₁₄, R₁₆ et R₁₇ sont tels définis précédemment.

Selon un développement, le dérivé de triazole est obtenu par réaction d'un aminotriazole de formule (VIII) avec un diacide de formule (IX) et/ou un anhydride succinique de formule (X) suivantes :

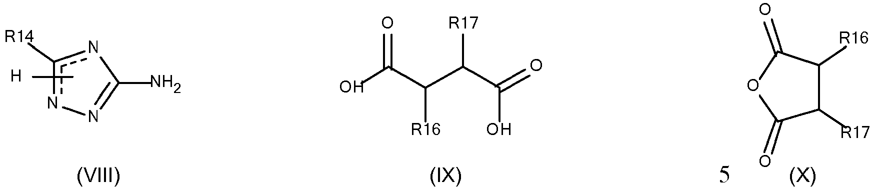

Dans lesquelles R₁₄, R₁₆ et R₁₇ sont tels définis précédemment.

L'objet de la présente invention vise également l'utilisation d'une composition d'additifs selon la présente invention, dans un carburant gazole ayant un taux de soufre inférieur ou égal à 500 ppm massiques, de préférence comprenant un biogazole.

L'objet de la présente invention vise également un carburant gazole ayant un taux de soufre inférieur ou égal à 500 ppm massiques comprenant au moins 5 ppm massique d'une composition d'additifs selon la présente invention, de préférence un carburant comprennant jusqu'à 30% volume de biogazole.

Selon un mode de réalisation particulier, le carburant comprend en plus au moins un ou plusieurs autres additifs choisis parmi les anti-oxydants, les améliorants de combustion, les inhibiteurs de corrosion, les additifs de tenue à froid, les colorants, les désémulsionnants, les désactivateurs de métaux, les agents anti-mousse, les agents améliorant l'indice de cétane, les additifs de lubrifiance, les co-solvants et les agents compatibilisants.

En particulier, la concentration massique de chaque premier et deuxième additifs et éventuellement troisième additif varie de 5 à 5000 ppm.

L'objet de la présente invention vise également l'utilisation d'un carburant gazole selon la présente invention dans un moteur Diesel, pour améliorer les performances dudit moteur, en particulier pour :
- limiter les dépôts dans ledit moteur Diesel,
- réduire la consommation de carburant dudit moteur (action « Fuel Eco »),
- minimiser la perte de puissance dudit moteur, maintenir la propreté dudit moteur (action « keep-clean ») en limitant les dépôts de savon et/ou de vernis dans les parties internes des systèmes d'injection dudit moteur, et/ou
- nettoyer les parties internes encrassées du système d'injection dudit moteur, en éliminant au moins en partie les dépôts de savon et/ou de vernis dans lesdites parties internes (action curative « clean-up »).

Selon un mode de réalisation particulier, le moteur est un moteur à injection directe, de préférence à système d'injection haute pression (« common-rail »).

### DESCRIPTION DETAILLEE

D'autres avantages et caractéristiques ressortiront plus clairement de la description qui va suivre. Les modes particuliers de réalisation de l'invention sont donnés à titre d'exemples non limitatifs.

La présente invention concerne une composition d'additifs comprenant au moins un premier, un deuxième additif et un troisième additif. La présente invention concerne également l'utilisation d'une telle composition d'additifs dans un carburant gazole ayant un taux de soufre inférieur ou égal à 500 ppm massiques, de préférence comprenant un biogazole.

### Premier additif

Le premier additif comprend au moins 50% en masse d'un composé A choisi parmi les esters partiels de polyols et d'hydrocarbures aliphatiques monocarboxyliques en C₄ à C₃₆, de préférence en C₁₂-C₂₄, plus préférentiellement en C₁₆-C₂₀, saturés ou insaturés, linaires ou ramifiés, cycliques ou acycliques, lesdits esters partiels pouvant être pris seuls ou en mélange.

Le composé A comprend, de préférence, x motifs ester, y motifs hydroxyle et z motifs éther, x, y et z étant des nombres entiers tels que x varie de 1 à 10, y varie de 1 à 10, et z varie de 0 à 6.

Selon un mode de réalisation x varie de 1 à 10, y varie de 3 à 10, et z varie de 0 à 6.

Selon un autre mode de réalisation x varie de 1 à 4, y varie de 1à 7 et z varie de 1 à 3. Avantageusement, x varie de 2 à 4.

La synthèse d'esters partiels de polyols est connue en soi ; ils peuvent par exemple être préparés par estérification d'acide(s) gras et de polyols linéaires et/ou ramifiés comprenant éventuellement des (hétéro)cycles de 5 à 6 atomes supportant des fonctions hydroxyle. Généralement ce type de synthèse conduit à un mélange de mono-, di-, tri- et éventuellement de tétra-esters ainsi que de faibles quantités d'acide(s) gras et de polyols qui n'ont pas réagi.

Selon un mode de réalisation le composé A est obtenu par estérification d'un ou de plusieurs acide(s) gras en C₄ à C₃₆, de préférence en C₁₀-C₂₄, plus préférentiellement en C₁₂-C₂₄, comprenant éventuellement une ou plusieurs liaisons éthyléniques, et d'un polyol, linéaire ou ramifié, cyclique ou acyclique comprenant éventuellement un hétérocycle de 5 à 6 atomes, de préférence un hétérocycle de 4 à 5 atomes de carbone et un atome d'oxygène, substitué par des groupements hydroxyles.

Les acides gras sont, avantageusement, choisis parmi le groupe constitué par les acides stéarique, isostéarique, linolénique, oléique, linoléique, béhénique, arachidonique, ricinoléique, palmitique, myristique, laurique, caprique, pris seuls ou en mélange.

Les acides gras peuvent provenir de la transestérification ou de la saponification d'huiles végétales et/ou de graisses animales. Les huiles végétales et/ou les graisses animales préférées seront choisies en fonction de leur concentration en acide oléique. On pourra se reporter par exemple au Tableau 6.21 du chapitre 6 de l'ouvrage Carburants & Moteurs de J.C. Guibet et E. Faure, édition 2007 dans lequel sont indiquées les compositions de plusieurs huiles végétales et graisses animales.

Les acides gras peuvent également provenir d'acides gras dérivés de tall oil (Tall Oil Fatty Acids) qui comprennent une quantité majoritaire d'acides gras, typiquement supérieure ou égale à 90 % massiques ainsi que des acides résiniques et d'insaponifiables en quantité minoritaire, i-e en quantités en général inférieures à 10 %.

On choisira, le polyol parmi les polyols linéaires ou ramifiés comprenant plus de trois fonctions hydroxyle et les polyols comprenant au moins un cycle de 5 ou 6 atomes, de préférence un hétérocycle de 4 à 5 atomes de carbone et un atome d'oxygène, éventuellement substitué par des groupements hydroxyle, pris seuls ou en mélange.

Selon une variante le polyol est choisi parmi les polyols comprenant au moins un cycle de 5 ou 6 atomes, de préférence un hétérocycle de 4 à 5 atomes de carbone et un atome d'oxygène, éventuellement substitué par des groupements hydroxyle, pris seuls ou en mélange.

Selon une autre variante, le polyol est choisi parmi les polyols comprenant au moins deux hétérocycles de 4 ou 5 atomes de carbone et d'un atome d'oxygène, reliés par la formation d'une liaison acétal entre une fonction hydroxyle de chaque cycle, lesdits hétérocycles étant éventuellement substitués par des groupements hydroxyle.

Le polyol est choisi parmi le groupe consistant en l'érythritol, le xylitol, l'arabitol, le ribitol, le sorbitol, le maltitol, l'isomaltitol, le lactitol, le volemitol, le mannitol, le pentaérythritol, le 2-hydroxyméthyl-1,3-propandediol, le 1,1,1-tri(hydroxyméthyl)éthane, le triméthylolpropane, le sorbitan et les glucides comme le sucrose, le fructose, le maltose, le glucose et le saccharose, de préférence le sorbitan.

Selon l'invention, le composé A est choisi parmi les esters partiels de sorbitan, de préférence les di-, mono- et tri-esters de sorbitan, pris seuls ou en mélange.

Selon une variante, le composé A est choisi parmi les esters partiels de sorbitan comprenant plus de 40% massique de triesters de sorbitan, de préférence plus de 50% massique.

Selon une autre variante, le composé A choisi parmi les esters partiels de sorbitan comprenant plus de 20% massique de monoesters de sorbitan et/ou plus de 20% massique de diesters de sorbitan, de préférence plus de 20% massique de monoesters de sorbitan et/ou plus de 30% massique de diesters de sorbitan, plus préférentiellement plus de 25% massique de monoesters de sorbitan et/ou plus de 35% massique de diesters de sorbitan.

Selon un mode de réalisation non conforme à l'invention, le composé A est choisi parmi les monoester(s) et/ou diester(s) de polyglycérols dérivés d'acide(s) gras, ayant plus de 50 % en nombre des chaînes grasses comprenant entre 12 et 24 atomes de carbone. De tels polyglycérols ont été décrits dans le document WO2013/120985

### Deuxième additif

Le deuxième additif est un sel d'ammonium quaternaire obtenu par réaction d'un composé azoté comprenant une fonction amine tertiaire et d'un agent de quaternarisation. Des exemples de sels d'ammonium quaternaires et leur procédé de préparation sont décrits dans les brevets US4253980, US3778371, US4171959, US4326973, US4338206, US5254138 et WO2010/132259 cités à titre d'exemple

Selon un mode de réalisation le composé azoté (a) est choisi parmi le produit de la réaction d'un agent d'acylation substitué par un groupement hydrocarboné et d'un composé comprenant au moins un groupement amine tertiaire et un groupement choisi parmi les amines primaires, secondaires ou les alcools.

Le composé azoté (a) est, de préférence, le produit de la réaction d'un agent d'acylation substitué par un groupement hydrocarboné et d'un composé comprenant à la fois un atome d'oxygène ou un atome d'azote capable de se condenser avec ledit agent d'acylation et également un groupement amine tertiaire.

L'agent d'acylation est choisi parmi les acides mono-ou poly-carboxyliques substitués par un groupement hydrocarboné et leur dérivés, seuls ou en mélange. L'agent d'acylation est, par exemple, choisi parmi les acides succiniques, phtaliques et propioniques substitués par un groupement hydrocarboné.

Le substituant hydrocarboné de l'agent d'acylation comprend, de préférence, au moins 8, de préférence, au moins 12 atomes de carbone, par exemple entre 30 ou 50 atomes de carbone. Ledit substituant hydrocarboné peut comprendre jusqu'à environ 200 atomes de carbone.

Le substituant hydrocarboné de l'agent d'acylation a, de préférence, une masse moléculaire moyenne en nombre (Mₙ) comprise entre 170 à 2800, par exemple entre 250 à 1500, plus préférentiellement entre 500 à 1500 et, encore plus préférentiellement entre de 500 à 1100. Une gamme de valeur de Mₙ comprise entre 700 et 1300 est particulièrement préférée, par exemple de 700 à 1000.

A titre d'exemple de groupements hydrocarbonés substituant l'agent d'acylation, on peut citer les groupements n-octyle, n-décyle, n-dodécyle, tétrapropényle, n-octadécyle, oléyle, octadecyle ou triacontyle.

Le substituant hydrocarboné de l'agent d'acylation peut être obtenu à partir d'homo- ou d'inter-polymères (par exemple de copolymères, terpolymères) de mono-et di-oléfines ayant de 2 à 10 atomes de carbone, par exemple à partir d'éthylène, de propylène, de 1-butène, d'isobutène, de butadiène, d'isoprène, de 1-hexène ou de 1-octène. De préférence, ces oléfines sont des 1-mono-oléfines.

Le substituant hydrocarboné de l'agent d'acylation peut également être des dérivés d'analogues halogénés (par exemple chlorés ou bromés) de ces homo-ou inter-polymères.

Selon une variante, le substituant hydrocarboné de l'agent d'acylation peut être obtenu à partir d'autres sources, par exemple à partir de monomères d'alcènes à haut poids moléculaire (par exemple, 1-tétracontène) et leurs analogues chlorés ou hydrochlorés, de fractions de pétrole aliphatiques, par exemple les cires de paraffine, leurs analogues craqués, chlorés et/ou hydrochlorés, d'huiles blanches, d'alcènes synthétiques, par exemple produits par procédé Ziegler-Natta (par exemple les graisses de polyéthylène) et d'autres sources connues de l'homme de l'art.

Toute insaturation dans le groupement hydrocarboné de l'agent d'acylation peut également être réduite ou éliminée par hydrogénation selon tout procédé connu.

On entend par groupement "hydrocarboné", tout groupement ayant un atome de carbone directement fixé au reste de la molécule et ayant principalement un caractère hydrocarboné aliphatique.

Des groupements hydrocarbonés selon l'invention peuvent également contenir des groupements non hydrocarbonés. Par exemple, ils peuvent contenir jusqu'à un groupement non-hydrocarboné pour dix atomes de carbone à condition que le groupement non-hydrocarboné ne modifie pas de façon significative le caractère principalement hydrocarboné du groupement. On peut citer à titre d'exemple de tels groupements bien connus de l'homme de l'art, les groupements hydroxyle, les halogènes (en particulier les groupements chloro- et fluoro-), les groupements alcoxy, alkylmercapto, alkyle sulfoxy.

On préférera néanmoins, les substituants hydrocarbonés ne contenant pas de tels groupements non-hydrocarbonés et ayant un caractère purement d'hydrocarbure aliphatique.

Le substituant hydrocarboné de l'agent d'acylation est, de préférence, essentiellement saturé, c'est-à-dire qu'il ne contient pas plus d'une liaison insaturée carbone-carbone pour chaque tranche de dix liaisons simples carbone-carbone présentes.

Le substituant hydrocarboné de l'agent d'acylation contient, avantageusement, pas plus d'une liaison insaturée carbone-carbone non-aromatique tous les 50 liaisons carbone-carbone présentes.

Selon un mode de réalisation particulier préféré, le substituant hydrocarboné de l'agent d'acylation est, de préférence, choisi parmi les polyisobutènes connus dans l'art antérieur. Selon l'invention l'agent d'acylation substitué par un groupement hydrocarbyle est un anhydride polyisobutényl-succinique (PIBSA).

La préparation d'anhydrides polyisobutényl-succinique (PIBSA) est largement décrite dans la littérature. On peut citer à titre d'exemple les procédés comprenant la réaction entre des polyisobutènes (PIB) et de l'anhydride maléique décrits dans les documents US3361673 et US3018250 ou le procédé comprenant la réaction d'un polyisobutène (PIB) halogéné, en particulier chloré, avec de l'anhydride maléique (US3172892).

Selon une variante, l'anhydride polyisobutényl-succinique peut être préparé en mélangeant une polyoléfine avec de l'anhydride maléique puis en passant du chlore à travers le mélange (GB949 981).

On utilisera en particulier les polyisobutènes (PIB) dits hautement réactifs. On entend par polyisobutènes (PIB) hautement réactifs des polyisobutènes (PIB) dans lesquels au moins 50%, de préférence au moins 70% ou plus, des doubles liaisons oléfiniques terminales sont du type vinylidène comme décrit dans le document EP0565285. En particulier, les PIB préférés sont ceux ayant plus de 80 mol% et jusqu'à 100 mol% de groupements terminaux vinylidène tel que décrits dans le document EP1344785.

D'autres groupements hydrocarbonés comprenant une oléfine interne par exemple comme ceux décrits dans la demande WO2007/015080 peuvent également être utilisés.

On entend par oléfine interne, toute oléfine contenant principalement une double liaison non-alpha, qui est une oléfine bêta ou de position supérieure.

De préférence, ces matériaux sont essentiellement des bêta-oléfines ou des oléfines de position supérieure, par exemple contenant moins de 10% massique d'alpha-oléfine, de manière avantageuse moins de 5% massique ou moins de 2% massique.

Les oléfines internes peuvent être préparées par isomérisation d'alpha-oléfines selon tout procédé connu.

Le composé comprenant à la fois un atome d'oxygène ou un atome d'azote capable de se condenser avec l'agent d'acylation et un groupement amine tertiaire peut, par exemple, être choisi parmi le groupe consistant en : N,N-diméthylaminopropylamine, N,N-diéthylaminopropylamine, la N, N- diméthylamino-éthylamine. Ledit composé peut en outre être choisi parmi les composés hétérocycliques substitué par des alkylamines tels que la 1-(3-aminopropyl)-imidazole et 4-(3-aminopropyl)morpholine, 1-(2-aminoéthyl)pipéridine, la 3,3-diamino-N-methyldipropylamine, et 3'3-bisamino(N, N-diméthylpropylamine).

Le composé comprenant à la fois un atome d'oxygène ou un atome d'azote capable de se condenser avec l'agent d'acylation et un groupement amine tertiaire peut également être choisi parmi les alcanolamines, y compris, mais sans s'y limiter, la triéthanolamine, la triméthanolamine, le N,N-diméthylaminopropanol, le N, N-diméthylaminoéthanol, N,N-diéthylaminopropanol, le N,N-diéthylaminoéthanol, N,N-diethylaminobutanol, la N,N,N-tris(hydroxyéthyl)amine, la N,N,N-tris(hydroxyméthyl)amine, la N,N,N-tris(aminoéthyl)amine, la N,N-dibutylaminopropylamine et le N,N,N'-triméthyl-N'-hydroxyéthyl-bisaminoéthyléther, la N,N-bis(3-diméthylamino-propyl)-N-isopropanolamine, la N-(3-diméthylamino-propyl)-N,N-diisopropanolamine, la N'-(3-(Diméthylamino)propyl)-N,N-diméthyl-1,3-propanediamine; le 2-(2-diméthylaminoéthoxy)éthanol et la N,N,N'-triméthylaminoéthyléthanolamine.

Selon l'invention le composé azoté (a) est un produit de réaction d'un agent d'acylation substitué par un groupement hydrocarboné et d'une amine de formule (I) ou (II) suivantes :

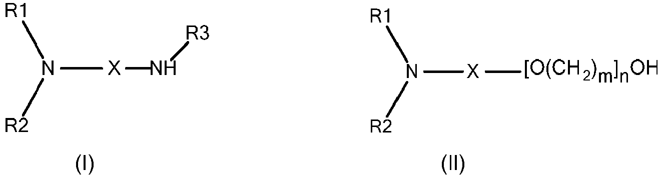

Dans laquelle :
R₁ et R₂ sont identiques ou différents et représentent, indépendamment l'un de l'autre, un groupement alkyle ayant de 1 à 22 atomes de carbone ;
X est un groupement alkylène ayant de 1 à 20 atomes de carbone ;
m est un nombre entier compris entre 1 et 5 ;
n est un nombre entier compris entre 0 et 20 ; et
R₃ est un atome d'hydrogène ou un groupement alkyle de C₁ à C₂₂.

Lorsque le composé azoté (a) comprend une amine de formule (I), R₃ est avantageusement un atome d'hydrogène ou un groupement alkyle en C₁ à C₁₆, de préférence un groupement alkyle en C₁ à C₁₀, encore plus préférentiellement un groupement alkyle en C₁ à C₆. R₃ peut, par exemple, être choisi parmi le groupe consistant en l'hydrogène, méthyle, éthyle, propyle, butyle and leurs isomères. De manière préférée R₃ est un atome d'hydrogène.

Lorsque le composé azoté (a) comprend une amine de formule (II), m de préférence égal à 2 ou 3, plus préférentiellement égal à 2 ; n est de préférence un entier compris entre 0 à 15, plus préférentiellement entre 0 à 10, encore plus préférentiellement entre 0 à 5. Avantageusement, n est 0 et le composé de formule (II) est un alcool.

Selon un mode de réalisation préférentiel, le composé azoté (a) est le produit de la réaction de l'agent d'acylation substitué par un groupement hydrocarboné et de la diamine de formule (I).

R₁ et R₂ peuvent représenter, indépendamment l'un de l'autre, un groupement alkyle en C₁ à C₁₆, de préférence un groupement alkyle en C₁ à C₁₀ à faire un groupe alkyle. R₁ et R₂ peuvent représenter, indépendamment l'un de l'autre, un groupement méthyle, éthyle, propyle, butyle, pentyle, hexyle, heptyle, octyle ou leurs isomères. Avantageusement, R₁ et R₂ représentent indépendamment l'un de l'autre, un groupement en C₁ à C₄, de préférence un groupement méthyle.

X représente, de préférence, un groupement alkylène ayant 1 à 16 atomes de carbone, de préférence de 1 à 12 atomes de carbone, plus préférentiellement de 1 à 8 atomes de carbone, par exemple de 2 à 6 atomes de carbone ou de 2 à 5 atomes de carbone. X représente avantageusement un groupement éthylène, propylène ou butylène, en particulier un groupe propylène.

Le sel d'ammonium quaternaire du deuxième additif peut par exemple être obtenu selon le procédé de préparation décrit dans la demande internationale WO2006/135881.

Selon une variante préférée, le composé azoté (a) est le produit de réaction d'un dérivé d'acide succinique substitué par un groupement hydrocarboné, de préférence un anhydride polyisobutényl-succinique, et d'un alcool ou d'une amine comportant également un groupe amine tertiaire.

Le dérivé d'acide succinique substitué par un groupement hydrocarboné réagit avec l'amine comprenant également un groupement amine tertiaire sous certaines conditions pour former un succinimide (forme fermée).

Selon une variante, la réaction du dérivé d'acide succinique et de l'amine peut aboutir sous certaines conditions à un succinamide c'est-à-dire, un composé comprenant un groupe amide et un groupe acide carboxylique (forme ouverte). Selon une autre variante, un alcool comprenant également un groupement amine tertiaire réagit avec le dérivé de l'acide succinique pour former un ester. Cette molécule d'ester comprend également un groupement carboxyle -CO₂H libre (forme ouverte).

Ainsi, dans certains modes de réalisation le composé azoté (a) peut être le produit de réaction d'un dérivé d'acide succinique et d'une amine ou un alcool qui est un ester ou un amide et qui comprend en outre également un groupement carboxyle -CO₂H n'ayant pas réagi (forme ouverte).

Le sel d'ammonium quaternaire du deuxième additif selon dans la présente invention est directement obtenu par réaction entre le composé azoté décrit ci-dessus comprenant une fonction amine tertiaire et un agent de quaternarisation.

Selon un mode de réalisation particulier, l'agent de quaternarisation est choisi parmi le groupe constituant en les dialkyle sulfates, les esters d'acide carboxylique; les halogénures d'alkyle, les halogénures de benzyle, les carbonates hydrocarbonés, et les époxydes hydrocarbonés éventuellement en mélange avec un acide, seuls ou en mélange.

Pour les applications de carburant, il est souvent souhaitable de réduire la teneur en halogène, soufre et les composés contenant du phosphore.

Ainsi, si un agent de quaternarisation contenant un tel élément est utilisé, il peut être avantageux d'effectuer une réaction ultérieure pour échanger le contre-ion. Par exemple, un sel d'ammonium quaternaire formé par réaction avec un halogénure d'alkyle peut ensuite être mis en réaction avec de l'hydroxyde de sodium et le sel d'halogénure de sodium éliminé par filtration.

L'agent de quaternarisation peut comprendre des halogénures tels que les chlorure, iodure ou bromure ; des hydroxydes ; des sulfonates ; des bisulfites ; des alkylsulfates tels que le sulfate de diméthyle ; des sulfones ; des phosphates ; des alkylphosphates en C₁-C₁₂; des dialkylphosphates en C₁-C₁₂ ; des borates ; des alkylborates en C₁-C₁₂ ; des nitrites ; des nitrates ; des carbonates ; des bicarbonates ; des alcanoates ; les O,O-dialkyldithiophosphates en C₁-C₁₂, seuls ou en mélange.

Selon un mode de réalisation particulier, l'agent de quaternarisation peut être dérivé de dialkylsulfates tels que le sulfate de diméthyle, de N-oxydes, de sulfones tels que le propane- et butane- sulfone, d'halogénures d'alkyle, d'acyle ou d'aralkyle tels que le chlorure de méthyle et éthyle, le bromure, iodure ou chlorure de benzyle, et les carbonates hydrocarbonés(ou alkylcarbonates). Si l'halogénure d'acyle est le chlorure de benzyle, le noyau aromatique est éventuellement substitué par un ou plusieurs groupements alkyle ou alcényle. Les groupements hydrocarbonés (alkyles) des carbonates hydrocarbonés peuvent contenir de 1 à 50, de 1 à 20, de 1 à 10 ou 1 à 5 atomes de carbone par groupement.

Selon un mode de réalisation particulier, les carbonates hydrocarbonés contiennent deux groupements hydrocarbonés qui peuvent être identiques ou différents. A titre d'exemple de carbonates hydrocarbonés, on peut citer le carbonate de diméthyle ou de diéthyle.

Selon un mode de réalisation particulier, l'agent de quaternarisation est choisi parmi les époxydes hydrocarbonés représentés par la formule (III) suivante:

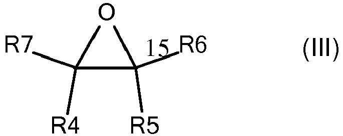

Dans laquelle R₄, R₅, R₆ et R₇ peuvent être identiques ou différentes et représentent indépendamment un atome d'hydrogène ou un groupement hydrocarboné en C₁-C₅₀. A titre d'exemple non limitatif, on peut citer l'oxyde de styrène, l'oxyde d'éthylène, l'oxyde de propylène, l'oxyde de butylène, l'oxyde de stilbène et les époxydes en C₁-C₅₀. L'oxyde de styrène est particulièrement préféré.

Typiquement, de tels époxydes hydrocarbonés sont utilisés comme agent de quaternarisation en combinaison avec un acide, par exemple avec l'acide acétique.

Néanmoins, dans le mode de réalisation particulier décrit ci-dessus faisant intervenir le composé azoté (a) constitué d'une succinamide substituée comprenant à la fois une fonction amide ou ester et une fonction acide carboxylique (forme ouverte), l'époxyde hydrocarboné peut être utilisé seul comme l'agent de quaternarisation sans acide supplémentaire. Sans être lié par cette hypothèse, il semblerait que la présence de la fonction acide carboxylique dans la molécule favorise la formation du sel d'ammonium quaternaire.

Dans un tel mode de réalisation particulier n'utilisant pas acide supplémentaire, un solvant protique est utilisé pour la préparation du sel d'ammonium quaternaire. A titre d'exemple, les solvants protiques comme l'eau, les alcools (y compris les alcools polyhydriques) peuvent être utilisés seul ou en mélange. Les solvants protiques préférés ont une constante diélectrique supérieure à 9. Les sels d'ammonium quaternaire appropriés préparés à partir d'amides ou esters et des dérivés d'acide succinique sont décrits dans WO2010/132259.

Selon un mode de réalisation particulier, l'agent de quaternarisation comprend un composé de formule (IV):

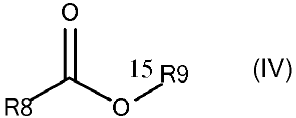

Dans laquelle R₈ est un groupement alkyle, alcényle, aryle et aralkyle éventuellement substitué, et R₉ est un groupement alkyle, aryle ou alkylaryle en C₁ à C₂₂.

Le composé de formule (IV) est un ester d'acide carboxylique apte à réagir avec une amine tertiaire pour former un sel d'ammonium quaternaire. Des composés de formule (IV) sont choisis, par exemple parmi les esters d'acides carboxyliques ayant un pKa de 3,5 ou moins. Le composé de formule (IV) est, de préférence, choisi parmi les esters d'acide carboxylique aromatique substitué, d'acide α-hydroxycarboxylique et d'acide polycarboxylique.

Selon un mode de réalisation particulier, l'ester est un ester d'acide carboxylique aromatique substitué de formule (IV) dans laquelle R₈ est un groupement aryle substitué. De préférence, R₈ est un groupement aryle substitué ayant 6 à 10 atomes de carbone, de préférence un groupement phényle ou naphtyle, plus préférentiellement un groupement phényle. R₈ est avantageusement substitué par un ou plusieurs groupements choisis parmi les radicaux carboalcoxy, nitro, cyano, hydroxy, SR₁₀ et NR₁₀ R₁₁. Chacun des groupements R₁₀ et R₁₁ peut être un atome d'hydrogène ou un groupement alkyle, alcényle, aryle ou carboalcoxy éventuellement substitués. Chacun des groupements R₁₀ et R₁₁ représente, avantageusement, l'atome d'hydrogène ou un groupement alkyle en C₁ à C₂₂ éventuellement substitué, de préférence l'atome d'hydrogène ou un groupement alkyle en C₁ à C₁₆, plus préférentiellement l'atome d'hydrogène ou un groupement alkyle en C₁ à C₁₀, encore plus préférentiellement l'atome d'hydrogène ou un groupement alkyle en C₁ à C₄. R₁₀ est de préférence un atome d'hydrogène et R₁₁ un atome d'hydrogène ou un groupement en C₁ à C₄. Avantageusement, R₁₀ et R₁₁ sont tous les deux un atome d'hydrogène.

Selon un mode de réalisation particulier, R₈ est un groupe aryle substitué par un ou plusieurs groupements choisis parmi les radicaux hydroxyle, carboalcoxy, nitro, cyano et NH₂. R₈ peut être un groupement aryle polysubstitué, par exemple trihydroxyphényle. Avantageusement, R₈ est un groupement aryle monosubstitué, de préférence, substitué en ortho. R₈ est, par exemple, substitué par un groupement choisi parmi les radicaux OH, NH₂, NO₂ ou COOMe, de préférence OH ou NH₂. R₈ est, de préférence, un groupement hydroxy-aryle, en particulier le 2-hydroxyphényle.

Selon un mode de réalisation particulier, R₉ est un groupement alkyle ou alkylaryle. R₉ peut être un groupement alkyle en C₁ à C₁₆, de préférence en C₁ à C₁₀, avantageusement en C₁ à C₈. R₉ peut être un groupement alkylaryle en C₁ à C₁₆, de préférence en C₁ à C₁₀, avantageusement en C₁ à C₈. R₉ peut per exemple être choisi parmi les groupements méthyle, éthyle, propyle, butyle, pentyle, benzyle ou leurs isomères. De préférence, R₉ est un groupement benzyle ou méthyle, plus préférentiellement méthyle.

Un composé particulièrement préféré de formule (IV) est le salicylate de méthyle.

Selon un mode de réalisation particulier, le composé de formule (IV) est un ester d'un acide α-hydroxycarboxylique de formule suivante :

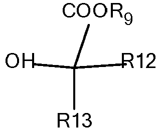

Dans laquelle R₁₂ et R₁₃ sont identiques ou différents et sont indépendamment choisis, parmi le groupe consistant en l'atome d'hydrogène, les groupements alkyle, alcényle, aryle ou aralkyle. De tels composés sont par exemple décrits dans le document EP 1254889.

Des exemples de composés de formule (IV) dans laquelle R₈COO est le résidu d'un acide α-hydroxycarboxylique comprennent les méthyl-, éthyl-, propyl-, butyl-, pentyl-, hexyl-, phényl-, benzyl- ou allyl-esters d'acide 2-hydroxy-isobutyrique ; les méthyl-, éthyl-, propyl-, butyl-, pentyl-, hexyl-, benzyl-, phényl ou allyl-esters d"acide 2-hydroxy-2-méthylbutyrique ; les méthyl-, éthyl-, propyl-, butyl-, pentyl-, hexyl-, benzyl-, phényl- ou allyl-esters d'acide 2-hydroxy-2-éthylbutyrique; les méthyl-, éthyl-, propyl-, butyl-, pentyl-, hexyl-, benzyl-, phényl- ou allyl-esters d'acide lactique et les méthyl-, éthyl-, propyl-, butyl-, pentyl-, hexyl-, allyl-, benzyl- ou phényl-esters d'acide glycolique. De ce qui précède, le composé préféré est le méthyl-2-hydroxyisobutyrate.

Selon un mode de réalisation particulier, le composé de formule (IV) est un ester d'un acide polycarboxylique comprenant les acides dicarboxyliques et les acides carboxyliques ayant plus de deux fonctions acides. Les fonctions carboxyliques sont de préférence toutes sous forme estérifiée. Les esters préférés sont les esters d'alkyle en C₁ à C₄.

Le composé de formule (IV) peut être choisi parmi les diesters d'acide oxalique, les diesters d'acide phtalique, les diesters d'acide maléique, les diesters d'acide malonique ou les diesters d'acide citrique. De préférence, le composé de formule (IV) est l'oxalate de diméthyle.

Selon une variante préférée, le composé de formule (IV) est un ester d'acide carboxylique ayant un pKa inférieur à 3,5. Pour les cas où le composé comprend plus d'un groupe acide, on se référera à la première constante de dissociation.

Le composé de formule (IV) peut être choisi parmi un ou plusieurs esters d'acide carboxylique choisi parmi l'acide oxalique, l'acide phtalique, l'acide salicylique, l'acide maléique, l'acide malonique, l'acide citrique, l'acide nitrobenzoïque, l'acide aminobenzoïque et le 2,4,6-acide trihydroxybenzoïque. Les composés préférés de formule (IV) sont l'oxalate de diméthyle, le 2-nitrobenzoate de méthyle et le salicylate de méthyle.

Selon un mode de réalisation particulièrement préféré, le sel d'ammonium quaternaire selon l'invention est formé par réaction du 2-hydroxybenzoate de méthyle ou de l'oxyde de styrène avec le produit de la réaction d'un anhydride polyisobutényl-succinique dont le groupement polyisobutylène (PIB) a une masse moléculaire moyenne en nombre (Mn) comprise entre 700 et 1000 et la diméthylaminopropylamine.

### Troisième additif

Le troisième additif est un dérivé de triazole de formule (V) suivante :

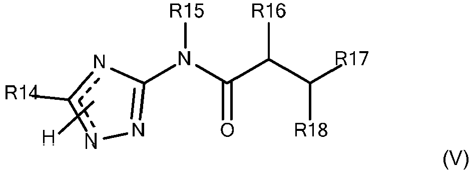

Dans laquelle :
- R₁₄ est choisi parmi le groupe consistant en un atome d'hydrogène, un groupement hydrocarboné aliphatique en C₁ à C₈, de préférence en C₁ à C₄, plus préférentiellement en C₁ à C₂, linéaire ou ramifié et un groupement carboxyle (-CO₂H). De préférence, R₁₄ est un atome d'hydrogène.
- R₁₅ et R₁₈ sont identiques ou différents et représentent, indépendamment l'un de l'autre, un groupement choisi parmi le groupe consistant en un atome d'hydrogène et un groupement hydrocarboné aliphatique en C₁ à C₃₃, de préférence en C₁ à C₂₁, linéaire ou ramifié, saturé ou insaturé, comprenant éventuellement un ou plusieurs atomes d'oxygène sous forme de fonction carbonyle (-CO-) et/ou carboxyle (-CO₂H), lesdits groupements R₁₅ et R₁₈ formant éventuellement ensemble un cycle de 5 à 8 atomes comprenant l'azote auquel R₁₅ est lié, étant entendu que dans ce cas R₁₅ et R₁₈ constituent alors un seul et même groupement hydrocarboné aliphatique en C₁ à C₃₃, de préférence en C₁ à C₂₁, linéaire ou ramifié, saturé ou insaturé, éventuellement substitué par un ou plusieurs atomes d'oxygène sous forme d'une fonction carbonyle (-CO-) et/ou carboxyle (-CO₂H).
- R₁₆ et R₁₇ sont identiques ou différents et représentent, indépendamment l'un de l'autre, un groupement choisi parmi le groupe consistant en un atome d'hydrogène et un groupement hydrocarboné aliphatique, linéaire ou ramifié, saturé ou insaturé, cyclique ou acyclique ayant de 2 à 200 atomes de carbones, de préférence de 14 à 200 atomes de carbone, plus préférentiellement de 50 à 170 atomes de carbone, encore plus préférentiellement entre 60 et 120 atomes de carbone.

Il est à noter que nous appliquons les règles conventionnelles de représentation (liaison en pointillé et liaison labile) pour indiquer que la position de l'atome d'hydrogène et de la double liaison dans le cycle triazole peut changer, ladite formule couvant ainsi les deux positions possibles.

Selon un mode de réalisation le dérivé de triazole a la formule (V) dans laquelle R₁₆ et R₁₇ sont identiques ou différents et représentent, indépendamment l'un de l'autre, un groupement choisi parmi le groupe consistant en un atome d'hydrogène et un groupement hydrocarboné aliphatique ayant une masse moléculaire moyenne en nombre (Mₙ) comprise entre 200 et 3000, de préférence entre 400 à 3000, plus préférentiellement entre 400 à 2500, encore plus préférentiellement entre 400 et 1500 ou entre 500 à 1500. Selon l'invention, ledit groupement hydrocarboné aliphatique est un groupement polyisobutylène (ou encore appelé polyisobutène noté PIB) ayant une masse moléculaire moyenne en nombre (Mₙ) comprise entre 200 et 3000, de préférence entre de préférence entre 400 à 3000, plus préférentiellement entre 400 à 2500, encore plus préférentiellement entre 400 et 1500 ou entre 500 à 1500, et R₁₆ et R₁₇ représente respectivement un atome d'hydrogène et un groupement PIB tel que décrit ci-dessus ou inversement.

Selon un autre mode de réalisation particulier, le dérivé de triazole est représenté par la formule (VI) suivante :

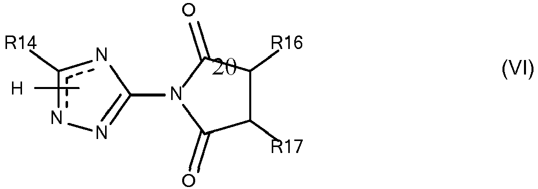

Dans laquelle R₁₄, R₁₆ et R₁₇ sont tels définis ci-dessus.

Selon un autre mode de réalisation particulier, le dérivé de triazole est représenté par la formule (VII) suivante :

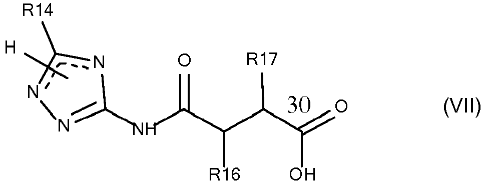

Dans laquelle R₁₄, R₁₆ et R₁₇ sont tels définis dans ci-dessus.

Selon un autre mode de réalisation particulier, le troisième additif est un mélange de dérivés de triazole de formules (VI) et (VII) tels que définies ci-dessus. Le dérivé de triazole peut se présenter sous forme d'un mélange de dérivés sous forme fermée (VI) et forme ouverte (VII). Le rapport massique (VI):(VII) dans ledit mélange des dérivés de triazole sous forme respectivement fermée et ouverte peut être compris entre 1 :100 et 100:1, de préférence entre 50:10 et 90:10, plus préférentiellement entre 91: 9 et 99: 1. On préférera un troisième additif comprenant moins de 10% massique de dérivés de triazole de formule (VII) sous forme ouverte.

On préférera un dérivé de triazole ou mélange de formule (VI) et/ou (VII) où R₁₄ est un atome d'hydrogène et, R₁₆ et R₁₇ représentent respectivement un atome d'hydrogène et un groupement PIB tel que décrit ci-dessus ou inversement (R₁₆=PIB et R₁₇ = H).

Le dérivé de triazole peut être obtenu selon tout procédé connu, en particulier par réaction d'un aminotriazole de formule (VIII) avec un diacide de formule (IX) et/ou un anhydride succinique de formule (X) suivantes :

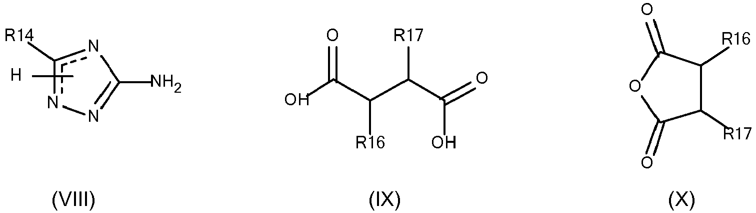

Dans lesquelles R₁₄, R₁₆ et R₁₇ sont tels définis ci-dessus.

Selon un mode de réalisation particulier, chacun des premier, deuxième et troisième additifs sont uniquement constitués par leur principe actif respectif, à savoir le composé A pour le premier additif, le sel d'ammonium quaternaire pour le deuxième additif et le dérivé de triazole pour le troisième additif.

Selon un mode de réalisation particulier de l'invention, la composition d'additifs comprend le troisième additif, le sel d'ammonium quaternaire obtenu à partir du composé azoté (a) et un composé A choisi parmi les esters partiels de sorbitan décrits précédemment, de préférence un triester de sorbitan.

La composition d'additifs décrite ci-dessus peut également comprendre un ou plusieurs autres additifs conventionnels. A titre d'exemple, on peut citer les anti-oxydants, les améliorants de combustion, les inhibiteurs de corrosion, les additifs de tenue à froid, les colorants, les désémulsifiants, les désactivateurs de métaux, les agents anti-mousse, les agents améliorant l'indice de cétane, les additifs de lubrifiance, les co-solvants et les agents compatibilisants.

De manière non exhaustive, le ou les autres additifs fonctionnels peuvent être choisis parmi :
- les additifs améliorant de combustion ; on peut citer les additifs procétane, notamment (mais non limitativement) choisis parmi les nitrates d'alkyle, de préférence le nitrate de 2-éthyl hexyle, les peroxydes d'aryle, de préférence le peroxyde de benzyle, et les peroxydes d'alkyle, de préférence le peroxyde de di ter-butyle;
- les additifs anti-oxydants, tels que des amines aliphatiques, aromatiques, les phénols encombrés, tels que BHT, BHQ ;
- les désémulsionnants ou désémulsifiants ;
- les additifs anti-statiques ou améliorants de conductivité ;
- les colorants ;
- les additifs anti-mousse, notamment (mais non limitativement) choisis par exemple parmi les polysiloxanes, les polysiloxanes oxyalkylés, et les amides d'acides gras issus d'huiles végétales ou animales; des exemples de tels additifs sont donnés dans EP861182, EP663000, EP736590 ;
- les additifs anti-corrosion tels que les sels d'ammonium d'acides carboxyliques ;
- les agents chélatants et/ou les agents séquestrants de métaux, tels que les triazoles, les disalicylidène alkylène diamines, et notamment le N, N' bis (salicylidène) 1,3-propane diamine ;
- les additifs de tenue à froid et notamment les additifs améliorant le point de trouble, notamment (mais non limitativement) choisis dans le groupe constitué par les terpolymères oléfine à chaîne longue/ester (méth)acrylique/maléimide, et les polymères d'esters d'acides fumarique /maléique. Des exemples de tels additifs sont donnés dans EP71513, EP100248, FR2528051, FR2528051, FR2528423, EP112195, EP172758, EP271385, EP291367 ; les additifs d'anti-sédimentation et/ou dispersants de paraffines notamment (mais non limitativement) choisis dans le groupe constitué par les copolymères acide (méth)acrylique/(méth)acrylate d'alkyle amidifié par une polyamine, les alkénylsuccinimides dérivés des polyamines, les dérivés d'acide phtalamique et d'amine grasse à double chaîne; des résines alkylphénol/aldéhyde ; des exemples de tels additifs sont donnés dans EP261959, EP593331, EP674689, EP327423, EP512889, EP832172 ; US2005/0223631 ; US5998530 ; WO93/14178; les additifs polyfonctionnels d'opérabilité à froid choisis notamment dans le groupe constitué par les polymères à base d'oléfine et de nitrate d'alkényle tels que décrits dans EP573490 ;
- d'autres additifs améliorant la tenue à froid et la filtrabilité (CFI), tels que les copolymères EVA et/ou EVP ;
- les neutralisateurs d'acidité tels que les alkylamines cycliques ;
- les marqueurs, notamment les marqueurs imposés par la réglementation, par exemple les colorants spécifiques à chaque type de carburant ou combustible.
- les agents parfumants ou masquants d'odeurs, tels que ceux décrits dans EP1 591514 ;
- d'autres additifs de lubrifiance, agents anti-usure et/ou modificateurs de frottement que ceux décrits précédemment, notamment (mais non limitativement) choisis parmi les dérivés d'acides carboxyliques mono- et polycycliques.

La composition d'additifs selon la présente invention peut être incorporée au carburant selon tout procédé connu. A titre d'exemple, la composition d'additifs peut être incorporée sous forme d'un concentré comprenant ladite composition et un solvant, compatible avec le carburant, la composition étant dispersée ou dissoute dans le solvant. De tels concentrés contiennent en général de 1 à 95%, de préférence, de 20 à 95 % massique de solvants.

La composition d'additifs comprend typiquement entre 5 et 99%, de préférence, entre 5 et 80% massique d'additifs.

Les solvants sont des solvants organiques qui contiennent en général des solvants hydrocarbonés. A titre d'exemple de solvants, on peut citer les fractions de pétrole, telles que le naphta, le kérosène, l'huile de chauffe ; les hydrocarbures aliphatiques et/ou aromatiques tels que l'hexane, le pentane, le décane, le pentadécane, le toluène, le xylène, et/ou l'éthylbenzène et les alcoxyalcanols tels que le 2-butoxyéthanol et/ou ou des mélanges d'hydrocarbures et éventuellement des co-solvants ou des compatibilisants, comme le 2-éthylhexanol, le décanol, l'isodécanol et/ou l'isotridécanol.

La composition d'additifs telle que décrite ci-dessus peut être utilisée pour additiver les carburants. En particulier, la composition d'additifs selon l'invention est particulièrement adaptée pour une utilisation dans un carburant gazole ayant un taux de soufre inférieur ou égal à 500 ppm massiques, de préférence comprenant un biogazole.

Les carburants gazole sont des carburants liquides pour moteurs à compression. On entend par carburant gazole les carburants comprenant des distillats moyens de température d'ébullition comprise entre 100 et 500°C ; leur température de cristallisation commençante TCC est souvent supérieure ou égale à -20°C, en général comprise entre -15°C et +10°C. Ces distillats sont des mélanges de bases pouvant être choisies par exemple parmi les distillats obtenus par distillation directe de pétrole ou d'hydrocarbures bruts, les distillats sous vide, les distillats hydrotraités, des distillats issus du craquage catalytique et/ou de l'hydrocraquage de distillats sous vide, les distillats résultant de procédés de conversion type ARDS (par désulfuration de résidu atmosphérique) et/ou de viscoréduction.

Les carburants gazole selon l'invention peuvent également contenir des coupes légères comme les essences issues de la distillation, des unités de craquage catalytique ou thermique, des unités d'alkylation d'isomérisation, de désulfuration, des unités de vapocraquage.

En outre, les carburants gazole peuvent contenir de nouvelles sources de distillats, parmi lesquelles on peut notamment citer :
- les coupes les plus lourdes issues des procédés de craquage et de viscoréduction concentrées en paraffines lourdes, comprenant plus de 18 atomes de carbone,
- les distillats synthétiques issus de la transformation du gaz tels que ceux issus du procédé Fischer Tropsch,
- les distillats synthétiques résultant du traitement de la biomasse d'origine végétale et/ou animale, comme notamment le NexBTL, pris seuls ou en mélange,
- les gazoles de coker,

Le carburant gazole selon l'invention peut également comprendre ou être constitué uniquement par un ou plusieurs biocarburant. Par biocarburant, on entend des carburants obtenus à partir de matière organique (biomasse), par opposition aux carburants issus de ressources fossiles. On peut citer, à titre d'exemple de biocarburants connus, les biogazoles (ou encore appelés biodiesel) et les alcools. Les alcools, tels que méthanol, éthanol, butanols, les éthers, (MTBE, ETBE, ...) sont en général utilisés en mélange avec les carburants essence, mais parfois avec des carburants plus lourds de type gazole.

Le biodiesel ou biogazole est une alternative au carburant pour moteur Diesel classique. Ce biocarburant est obtenu à partir d'huile végétale ou animale (y compris huiles de cuisson usagées) transformée par un procédé chimique appelé transestérification faisant réagir cette huile avec un alcool afin d'obtenir des esters d'acide gras. Avec le méthanol et l'éthanol on obtient respectivement des esters méthyliques d'acides gras (EMAG) et des esters éthyliques d'acides gras (EEAG). On peut citer à titre d'exemple d'huiles végétales et/ou animales et/ou leurs esters, les Esters Méthyliques ou Ethyliques d'Huiles Végétales ou d'Acides Gras (EMHV, EEHV, EMAG, EEAG) ; Pour les huiles végétales et/ou animales, on peut citer les huiles végétales et/ou animales hydrotraitées et/ou hydrocraquées et/ou hydrodéoxygénées (HDO).

Les mélanges de distillats moyens d'origine fossile et de biogazole sont généralement désignés pas la lettre "B" suivie par un nombre indiquant le pourcentage de biogazole contenu dans le gazole. Ainsi, un B99 contient 99% de biogazole et 1% de distillats moyens d'origine fossile, le B20, 20% de biogazole et 80% de distillats moyens d'origine fossile etc...

On distingue donc les carburants gazoles de type B0 qui ne contiennent pas de composés oxygénés des carburants biogazoles de type Bx qui contiennent x% (v/v) d'esters d'huiles végétales ou d'acides gras, le plus souvent esters méthyliques (EMHV ou EMAG). Lorsque le biogazole est utilisé seul dans les moteurs, on désigne le carburant par le terme B100.

Dans la suite de la présente demande, nous utiliserons le terme « carburant gazole » au sens large comme couvrant l'ensemble des carburants décrits ci-dessus.

Le carburant gazole a, de préférence, une teneur en soufre inférieure ou égale à 500 ppm massiques, avantageusement inférieure ou égale à 100 ppm massique, et pouvant atteindre une teneur inférieure ou égale à 50 ppm massique, voire même inférieure ou égale à 10 ppm massiques (c'est le cas des carburants diesel pour véhicules actuels dont le taux de soufre selon la norme européenne EN 590 actuellement en vigueur doit être inférieur ou égal à 10 ppm massiques).

Le carburant gazole comprend, avantageusement jusqu'à 30% volume de biogazole, de préférence jusqu'à 20% volume, plus préférentiellement jusqu'à 10% volume.

La composition d'additifs est, de préférence, incorporée dans le carburant de manière à obtenir une concentration massique de chaque additif contenu dans ladite composition variant de 5 à 5000 ppm, de préférence de 20 à 500 ppm, plus préférentiellement de 30 à 250 ppm dans le carburant. La concentration massique est calculée par rapport à la masse totale du carburant.

En particulier, la concentration massique de chaque premier et deuxième additifs et éventuellement troisième additif varie de 5 à 5000 ppm, et de préférence entre 20 et 500 ppm, plus préférentiellement entre 30 et 250 ppm.

L'homme du métier adaptera aisément la concentration de la composition d'additifs selon l'invention en fonction de la dilution éventuelle des additifs dans un solvant, pour obtenir la concentration voulue de chaque additif fonctionnel dans le carburant final.

Le carburant comprend, de préférence, au moins 5 ppm massique, de préférence au moins 100ppm massique de la composition d'additifs selon l'invention. On pourra incorporer dans un carburant jusqu'à 10%, de préférence jusqu'à 1%, plus préférentiellement jusqu'à 0,5 % massique d'additifs y compris la composition d'additifs.

Le rapport massique entre le premier et le deuxième additif (premier : deuxième) est compris entre 10 :1 et 1 :1, encore plus préférentiellement entre 5 :1 et 1 :1.

Le rapport massique entre le deuxième et troisième additif (deuxième : troisième) est compris entre 1 :10 et 10 :1, encore plus préférentiellement entre 1 :2 et 2 :1.

Le carburant gazole décrit ci-dessus peut être utilisé dans un moteur Diesel, pour améliorer la performance dudit moteur, notamment pour limiter les dépôts dans ledit moteur, de préférence, dans un moteur à injection directe, plus préférentiellement lorsque le moteur est muni d'un système d'injection haute pression (« common-rail »).

L'utilisation d'un tel carburant additivé avec la composition d'additifs selon la présente invention permet de réduire la consommation de carburant du moteur Diesel (action « Fuel Eco »), notamment permet de minimiser la perte de puissance dudit moteur.

La présente invention concerne également un procédé pour maintenir de la propreté du moteur Diesel (action « keep-clean ») en limitant les dépôts de savon et/ou de vernis dans les parties internes des systèmes d'injection dudit moteur et/ou pour nettoyer les parties internes du système d'injection dudit moteur encrassées, en éliminant au moins en partie les dépôts de savon et/ou de vernis dans lesdites parties internes (action curative « clean-up »).

Ledit procédé comprend la combustion d'une composition d'additifs selon la présente invention dans un moteur Diesel, en particulier dans un moteur à injection directe, de préférence, à système d'injection haute pression (« common-rail »).

### EXEMPLES

### Réactifs

- N,N-bis(2-éthylhexyl)-1,2,4-triazole-1-méthanamine (CAS 91273-04-0)
- Anhydride polyisobutényl-succinique (PIBSA) de masse moléculaire moyenne en nombre Mn de 1100 (GPC) commercialisé par la société BASF sous la marque « Glissopal*SA^{®}»
- 3-amino-1,2,4-triazole (CAS 61-82-5).

**Tableau 1 : composition massique d'esters partiels de sorbitan EPS1 et EPS2 déterminée par chromatographie à exclusion stérique (GPC)**

| Composant | EPS1 (%) | EPS2 (%) |
|---|---|---|
| Sorbitol | 1,4 | 0,3 |
| Acides gras libres | 1,2 | 5,9 |
| Monooléate de sorbitan | 24,7 | 7,1 |
| Dioléate de sorbitan | 41,3 | 30,4 |
| Trioléate de sorbitan | 28,7 | 54,3 |
| Composés non identifiés | 2,7 | 1,9 |

### Exemple 1 - synthèse d'additifs ester partiel de diglycérol : DGMO1 et DGMO2

En présence de catalyseur de type MeONa, on fait réagir à 170°C 90 g de diglycérol avec 500 g de l'huile de tournesol oléique (concentration en équivalent acide oléique sous pression réduite de 300 mbars (0,03 MPa) pendant 6 heures.

On reproduit le mode opératoire ci-dessous une 2^{nde} fois pour préparer un 2^{nd} échantillon de produit.

**Tableau 2 : composition massique des produits obtenus déterminée par chromatographie à exclusion stérique (GPC)**

| Composant | DGMO 1 | DGMO 2 |
|---|---|---|
| Monoester de diglycérol | 24,7 | 31,4 |
| Diester de diglycérol | 41,2 | 30,2 |
| Triester de diglycérol | 18,6 | 14,4 |
| Tétraester de diglycérol | 6,6 | 6,4 |
| Monoglycéride | 2,4 | nd |
| Diglycéride | 1 | 2,1 |
| Diglycérol | nd | 3,3 |
| Ester méthylique de tournesol oléique | 5,3 | 6,4 |

| | | |
|---|---|---|
| nd = non déterminé | | |

### Exemple 2 : Synthèse du 3-polvisobutène succinimide-1,2,4-triazole

Dans un ballon de 500mL, on charge 100g d'anhydride polyisobutényl-succinique (PIBSA) à 84% de matière active (76.64mmol) et on ajoute 26.3g d'un solvant aromatique de la marque « Solvesso 150ND ». Après avoir équipé l'ensemble d'un Dean Starck et mis sous atmosphère d'azote, on chauffe le milieu réactionnel à 140°C, sous forte agitation, puis on introduit 5,15 g (0.8éq./ 61.31mmol) de 3-amino-1,2,4-triazole. On chauffe ensuite à reflux pendant 4h afin d'éliminer 1.10mL d'eau dans le Dean Starck. On refroidit jusqu'à température ambiante puis on ajoute le complément de solvant Solvesso 150ND pour obtenir un produit à 50% de matière active. On obtient 202.4g d'un liquide brun limpide à 50% de matière active (50,8% mesuré).

Le produit obtenu est un mélange de dérivés de triazole sous forme ouverte (formule Il avec R₁ et R₃=H et R₄=PIB) et sous forme fermée (formule III avec R₁ et R₃=H et R₄=PIB ou R₁ et R₃= PIB et R₄ =H).

Le rapport des pourcentages massique forme ouverte /forme fermée déterminé par analyse GPC est de 95 :5.

### Exemple 3 : Synthèse d'un sel d'ammonium quaternaire SAQ

### . Préparation d'un composé azoté (a)

500g (0,38mol) d'anhydride polyisobutényl-succinique (PIBSA) sont chauffés à 70°C, chargés dans un réacteur équipé d'un Dean Starck et mis sous atmosphère d'azote. 76.9g d'heptane puis 52,3g (0,51 mol/1,34eq.) de diméthylaminopropylamine (DMAP) sont ajoutés dans le réacteur en maintenant la température de réaction à 70°C lors de l'introduction. On maintient le milieu réactionnel à 70°C pendant 1h. Le milieu réactionnel est refroidit jusqu'à température ambiante. On récupère le produit intermédiaire.

### . Quaternarisation de l'amine tertiaire du composé azoté (a)

470g du produit intermédiaire est placé dans un nouveau réacteur de 2L équipé d'un réfrigérant. On introduit ensuite 180,6g de 2-éthylhexanol et le milieu réactionnel est agité et chauffé jusqu'à 55°C sous atmosphère d'azote. 40.2g (0,69mol) d'oxyde de propylène est ensuite introduit progressivement dans le milieu grâce à une pompe à seringue sur une période de 4 heures, en maintenant la température de réaction à 55°C. Le mélange est maintenu à cette température durant 16h. Après refroidissement du milieu, on récupère le produit de la réaction comprenant principalement le dérivé de sel d'ammonium quaternaire (SAQ).

Des échantillons dudit produit de la réaction SAQ ont été analysés qualitativement par spectroscopie d'absorption dans l'infrarouge (IR), spectroscopie de masse et RMN . Cette analyse qualitative a permis de déterminer les principaux composants présents dans le produit de la réaction par comparaison avec des spectres de référence et en tenant compte des taux de dilution.

Une analyse quantitative sur résidu sec a également été effectuée par RMN ¹³C et par utilisation d'un standard interne.

La composition massique du produit SAQ mesurée à l'aide des techniques décrites ci-dessus est indiquée dans le tableau 3 ci-dessous.

**Tableau 3**

| Composants | % massique |
|---|---|
| Sel d'ammonium quaternaire- forme succinamide | 69,5 |
| Sel d'ammonium quaternaire - forme succinimide | 6,8 |
| PIBSA | 1,7 |
| réactifs résiduels (DMAP-oxyde de propylène..) | 8,4 |
| PIB | 10,2 |
| Autres PIB fonctionnalisé | 3,4 |

### PROTOCOLES DE TEST

### Protocole 1 : Evaluation de la résistance "lacquering" pour les dépôts de type IDID

Afin de tester les performances de ces additifs selon l'invention, les inventeurs ont également mis au point une nouvelle méthode fiable et robuste pour évaluer la sensibilité des carburants gazole, notamment ceux de qualité supérieure, au lacquering. Cette méthode, à la différence des méthodes décrites dans les publications citées précédemment, n'est pas une méthode de laboratoire mais est basée sur des essais moteurs et donc présente un intérêt technique et permet de quantifier l'efficacité des additifs ou des compositions d'additifs contre le lacquering.

La méthode de mesure du lacquering mise au point par les inventeurs est détaillée ci-dessous :
- Le moteur utilisé est un moteur K9K702 Renault, quatre cylindres et 16 soupapes diesel à injection haute pression Common Rail d'une cylindrée de 1.500 cm³ et d'une puissance de 65kW : la régulation de pression d'injection du carburant se faisant dans la partie haute pression de la pompe.
- Le point de puissance à 4.000 trs/min est utilisé pendant une durée de 40h ; la position de l'injecteur dans la chambre est descendue de 1 mm par rapport à sa position nominale, ce qui d'une part favorise le dégagement d'énergie thermique de la combustion, et d'autre part rapproche l'injecteur de la chambre de combustion.
- Le débit de carburant injecté est ajusté de manière à obtenir une température à l'échappement de 750°C en début d'essai.
- L'avance à l'injection a été augmentée de 1,5° vilebrequin par rapport au réglage nominal (on passe de + 12,5° à + 14° vilebrequin) toujours dans le but d'augmenter les contraintes thermiques subies par la buse de l'injecteur.
- Enfin, pour augmenter les contraintes subies par le carburant, la pression d'injection a été augmentée de 10 MPa par rapport à la pression nominale (c'est-à-dire passage de 140 MPa à 150 MPa) et la température est régulée à 65°C en entrée pompe haute pression.

La technologie utilisée pour les injecteurs nécessite un retour carburant élevé, ce qui favorise la dégradation du carburant puisqu'il peut être soumis à plusieurs cycles dans la pompe et la chambre haute pression avant d'être injecté dans la chambre de combustion.

Une variante de la méthode pour tester l'effet clean-up (i-e nettoyage des dépôts de type 1 et/ ou de type 2) a également été développée. Elle se base sur la méthode précédente mais est séparée en deux parties de 40h puis 30h :
- Les 40 premières heures sont effectuées avec un gazole B7 de qualité supérieure contenant 330 ppm massique d'un détergent de type PIBSI et 200 ppm massique d'un mélange d'acide gras majoritairement acide oléique avec un indice d'acide de 180 mg de KOH/g, ce mélange étant connu pour sa tendance à générer des dépôt de type "lacquering". Après 40h, deux des quatre injecteurs sont démontés et côtés afin de valider la quantité de dépôts qui sont présents et deux injecteurs neufs sont alors installés à la place.
- Les 30 dernières heures de l'essai sont réalisées avec le produit à évaluer. A la fin de l'essai (70h au total), les injecteurs sont démontés et côtés.

A la fin de l'essai, trois lots de deux injecteurs sont disponibles :
- Lot 1 : 2 injecteurs ayant vu 40h de carburant de qualité supérieure connu pour sa tendance à générer du "lacquering" décrit ci-dessus.
- Lot 2 : 2 injecteurs ayant vu 40h de carburant de qualité supérieure connu pour sa tendance à générer du "lacquering" décrit ci-dessus + 30h de produit à évaluer.
- Lot 3 : 2 injecteurs ayant vu 30h de produit à évaluer.

### Expression des résultats

Pour s'assurer de la validité du résultat, différents paramètres sont contrôlés durant l'essai : puissance, couple et consommation de carburant indiquent si l'injecteur s'encrasse ou si son fonctionnement est détérioré par une formation de dépôts puisque le point de fonctionnement est le même tout au long de l'essai. Les températures caractéristiques des différents fluides (liquide de refroidissement, carburant, huile) permettent de contrôler la validité des essais. Le carburant est régulé à 65°C en entrée pompe, le liquide de refroidissement est régulé à 90°C en sortie moteur.

Les valeurs de fumées permettent de contrôler le calage de la combustion en début d'essai (valeur cible de 3FSN) et de s'assurer qu'elle est bien répétable d'un essai à l'autre.

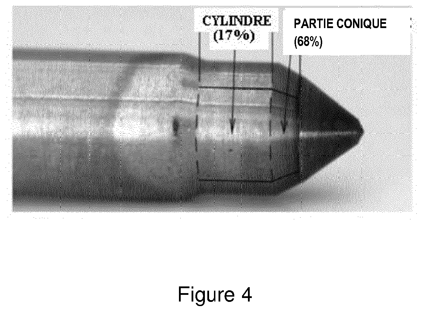

Les injecteurs sont démontés en fin d'essai pour visualiser et coter les dépôts formés le long des aiguilles. La procédure de cotation des aiguilles retenue est la suivante:
La surface de l'aiguille est divisée en 100 points. Pour chacun point, une cotation du dépôt de savon (type 1) et de vernis (type 2) est réalisée. La zone du cylindre (suivant directement la partie conique) représente 68 % de la cotation globale de l'aiguille et la zone du cône représente 32 % de la cotation globale de l'aiguille ; Pour faciliter la cotation, chacune de ces deux zones est divisée en 4. Dans la figure 4, les % indiqués correspondent au quart de la surface des aiguilles : la pondération surfacique globale est donc de 17×4 = 68 %.

Pour les savons (dépôts type 1), l'échelle des cotations varie de -1 (cas d'un savon très fin) à -10 (cas d'un savon très épais fortement coloré). Une valeur de l'impact du savon est déterminée en calculant la moyenne arithmétique des cotations obtenues sur la population de points de l'aiguille cotée.

Pour les vernis (dépôts type 2), l'échelle des notes varie de 1 (cas d'un vernis noir équivalent à un important dépôt de vernis) à 10 (cas d'un vernis très clair équivalent à une aiguille neuve). Une valeur de l'impact du vernis est calculée en faisant la somme du nombre de points appartenant à la cotation (1 à 10) divisée par la valeur de la cotation. On détermine alors une note globale (N) sur 10 en pondérant l'impact des vernis et des savons.

Ainsi, pour les propriétés de maintien de la propreté des moteurs (action « keep-clean »), un seuil de performance produit a été déterminé par rapport à cette procédure de cotation : N < 7,5 = Non satisfaisant, N ≥ 7,5 = Satisfaisant. Pour les propriétés de nettoyage des parties internes du système d'injection des moteurs encrassées (action curative « clean-up »), un seuil de performance produit a été déterminé par rapport à cette procédure de cotation : Δ(N^{lot 2}- N^{lot 1}) < 1,55 = Non satisfaisant, Δ( N^{lot 2}- N_{G}^{lot 1}) ≥ 1,55 = Satisfaisant.

### Protocole 2 : Mesure de perte de puissance dans un moteur Diesel à système d'injection haute pression (DW10+Zn)

Le carburant est testé dans un moteur Peugeot DW10 utilisant des injecteurs répondant aux normes Euro 5 selon le procédé CEC F-98-8 DW10BTED4 développé et publié par The Coordinating European Council (CEC).

Afin de reproduire les conditions réelles d'un moteur Diesel moderne, une faible quantité de néodécanoate de zinc (1ppm) est ajouté dans le carburant à tester.

Ce test a été développé pour discriminer les carburants sur la base de leur capacité à produire ou à éviter des dépôts externes du système d'injection relatifs au cokage (en anglais "coking") ou bouchage des buses d'injection (en anglais "nozzle coking" ou "fouling").

Ce test permet de différentier les carburants sur la base de la perte de puissance induite par les dépôts de type cokage (comparaison entre le % de perte de puissance). Ce test permet notamment de différentier un carburant qui produit peu de dépôt de type cokage (perte de puissance < 2%) et ceux qui en produisent suffisamment pour induire une perte de puissance de 2% ou plus, considérée comme inacceptable pour les fabricants de moteur.

Le test selon le protocole CEC F-98-8 DW 10 est résumé ci-dessous :
Moteur Euro 4 Peugeot DW10BTED4 2.0L,HDi, turbodiesel , 4 cylindres en ligne avec turbocompresseur à géométrie variable et système de recirculation des gaz d'échappement (RGE)
Cylindrée : 1998 cm³
Chambre de combustion : 4 valves, injection directe
Puissance : 100 Kw à un régime de 4000tr/min
Couple : 320 N.m à un régime de 2000 tr/min
Système d'injection : Common rail avec injecteurs 6 trous contrôlés par système piézoélectrique ( EURO IV)
Pression max. : 1600bars
Contrôle des émissions : Conforme aux valeurs limites Euro 4 en tenant compte du système de post-traitement des gaz d'échappement.

Le test est divisé en les étapes suivantes :
0 - Etape de rodage des injecteurs : 16 cycles de 1 heure utilisant un carburant de référence non encrassant constitué par un gazole représentatif du marché France (B7 = gazole fabriqué en France contenant 7% d'EMAG (ester méthylique d'acides gras) et répondant à l'EN 590)

Le test du carburant à évaluer dure ensuite 44 heures au total, sans compter les périodes de préparation et de refroidissement. Les 44 heures se divisent en 32 heures de fonctionnement du moteur et 12 heures d'arrêt du moteur.

### 1- Etape de chauffe moteur :

1 cycle de 12 minutes selon le régime suivant :

| Etape | Tps (min) | Régime (tr/min) | Couple (Nm) |
|---|---|---|---|
| 1 | 2 | Arrêt | <5 |
| 2 | 3 | 2000 | 50 |
| 3 | 4 | 3500 | 75 |
| 4 | 3 | 4000 | 100 |

On monte ensuite le moteur en puissance jusqu'à une charge maximale de 4000 tr/min pendant 7 minutes puis on mesure la puissance moyenne sur 30s.

### 2- Etape de fonctionnement : 8 cycles de 1 heure suivant :

| Etape | Tps (min) | Régime (tr/min) | Charge (%) | Couple (Nm) | Température d'air après échangeur (°C) |
|---|---|---|---|---|---|
| 1 | 2 | 1750 | 20 | 62 | 45 |
| 2 | 7 | 3000 | 60 | 173 | 50 |
| 3 | 2 | 1750 | 20 | 62 | 45 |
| 4 | 7 | 3000 | 80 | 212 | 50 |
| 5 | 2 | 1750 | 20 | 62 | 45 |
| 6 | 10 | 4000 | 100 | * | 50 |
| 7 | 2 | 1250 | (10) | 20 | 43 |
| 8 | 7 | 3000 | 100 | * | 50 |
| 9 | 2 | 1250 | (10) | 20 | 43 |
| 10 | 10 | 2000 | 100 | * | 50 |
| 11 | 2 | 1250 | (10) | 20 | 43 |
| 12 | 7 | 4000 | 100 | * | 50 |

A la fin du cycle, le régime du moteur est ramené à 1000 tr/min / 10Nm en 60s et maintenu à ce régime pendant 300s.

3- Etape de refroidissement : 60 secondes de refroidissement à l'arrêt suivis de 10 secondes à l'arrêt.

4- Etape de macération : arrêt moteur de 4 heures.

Le cycle global 1 à 4 est répété 4 fois. On mesure la perte de puissance à chaque cycle de fonctionnement soit 32 au total.

### TEST

### Test 1 selon le protocole 1 : résistance au "lacquering"

Selon la procédure d'évaluation des propriétés de maintien de la propreté des moteurs (action préventive « keep-clean ») et de nettoyage des parties internes du système d'injection des moteurs encrassées (action curative « clean-up »), décrite ci-dessus (Protocole 1), on évalue la performance de plusieurs compositions d'additifs introduits dans une matrice gazole représentative du marché France (B7 = gazole fabriqué en France contenant 7% d'EMAG (ester méthylique d'acides gras) et répondant à l'EN 590).

Le détail pour chaque carburant testé, ainsi que les résultats obtenus sont indiqués dans le tableau 4. Attention, les essais G, G' et G" correspondent au même essai, G correspondant au résultat pour le lot d'injecteurs 1, G' correspondant au résultat pour le lot d'injecteurs 2 et G" correspondant au résultat pour le lot d'injecteurs 3. L'essai G correspond à la phase d'encrassement (« Dirty-up »), l'essai G' à la phase de nettoyage (« Clean-up ») et l'essai G" à la phase de maintien de la propreté (« keep-clean »).

Les quantités indiquées dans le tableau 4 sont des quantités massiques (mg/kg)

**Tableau 4**

| N° carburant | | 1 | | | 2 | | | 3 | | | 4 | | | 5 | | |
|---|---|---|---|---|---|---|---|---|---|---|---|---|---|---|---|---|
| | | G | G' | G" | G | G' | G" | G | G' | G" | G | G' | G" | G | G' | G" |
| Matrice gazole | B7 | B7 | | | B7 | | | B7 | | | B7 | | | B7 | | |
| 3-polyisobutène succinimide-1,2,4-triazole (ppm) | - | - | 200 | 200 | - | - | - | - | - | - | - | 50 | 50 | - | - | - |
| EPS1 (ppm) | - | - | - | - | - | 200 | 200 | - | - | - | - | - | - | - | 200 | 200 |
| EPS2 (ppm) | - | - | - | - | - | - | - | - | - | - | - | 200 | 200 | - | - | - |
| SAQ (ppm) | - | - | - | - | - | - | - | - | 50 | 50 | - | 50 | 50 | - | 50 | 50 |
| N,N-bis(2-éthylhexyl)-1,2,4-triazole-1-méthanamine (ppm) | - | - | - | - | - | - | - | - | | - | - | - | - | - | 5 | 5 |
| **Note globale (N)** | 9,6 | 5,6 | 5,52 | 9,55 | 6,90 | 6,99 | 9,43 | 4,92 | 5,19 | 9,91 | 6,54 | 8,32 | 9,04 | 5,6 | 6,48 | 9,52 |
| Δ_{( N^{G'} - N^{G})} | * | **-0,08** | | | **-0,09** | | | **0,27** | | | **1,78** | | | **0,88** | | |
| Effet « keep-clean » (oui/non) | * | oui | | | oui | | | oui | | | **oui** | | | oui | | |
| Effet « clean-up » (oui/non) | * | non | | | non | | | non | | | **oui** | | | non | | |

| | | | | | | | | | | | | | | | | |
|---|---|---|---|---|---|---|---|---|---|---|---|---|---|---|---|---|
| ***: non pertinent** | | | | | | | | | | | | | | | | |

Ces essais démontrent l'efficacité curative (action clean up) des compositions d'additifs selon la présente invention c'est-à-dire leur aptitude à éliminer les dépôts de types vernis ou savons déjà formés sur les aiguilles puisque la cotation du jeu d'injecteurs G' est supérieur à celle du lot d'injecteur G (il y a eu un début de nettoyage significatif de l'aiguille), et confirme également leur efficacité préventive (action keep-clean) puisque la cotation du jeu d'injecteurs G" est nettement élevé.

On n'observe pas d'effet curatif (action clean up) lorsqu'on utilise les carburants 1, 2 ou 3. Ainsi, on en déduit que les premier, deuxième et troisième additifs utilisés seuls dans le carburant B7 n'apportent pas d'effet curatif audit carburant, relativement aux dépôts de type savon et/ou vernis.

En revanche, on note que le carburant 4 contenant une combinaison des premier, deuxième et troisième additifs a un effet à la fois préventif (Keep-clean) et curatif (Clean-up). En outre, on constate que comparativement, le carburant 5 contenant un dérivé de triazole non couvert par la présente invention ne présente pas d'effet curatif significatif (Clean-up).

### Test 2 selon le protocole 2 : résistance au coking,

On évalue la perte de puissance de plusieurs compositions d'additifs introduits dans la matrice gazole représentative du marché France (B7 = gazole fabriqué en France contenant 7% d'EMAG (ester méthylique d'acides gras) et répondant à l'EN 590), selon le protocole 2 (DW10 + Zn) décrit ci-dessus. Le détail de chaque carburant testé, ainsi que les résultats obtenus sont indiqués dans le tableau 5.

Les quantités indiquées dans le tableau 5 sont des quantités massiques (mg/kg).

**Tableau 5**

| N°carburant | 6 | 7 | 8 | 9 | 10 | 11 |
|---|---|---|---|---|---|---|
| Matrice gazole | B7 | B7 | B7 | B7 | B7 | B7 |
| 3-polyisobutène succinimide-1,2,4-triazole (ppm) | 50 | - | - | - | - | 50 |
| EPS2 (ppm) | - | - | - | - | 200 | 200 |
| SAQ (ppm) | - | 50 | 50 | 50 | 100 | 50 |
| N,N-bis(2-éthylhexyl)-1,2,4-triazole-1-méthanamine (ppm) | - | - | 5 | 8 | - | - |
| **Perte de puissance (%)** | -0,1 | -6,7 | -5,05 | -4,51 | -0,2 | 0,12 |

On constate que les carburants contenant la composition d'additifs selon la présente invention sont particulièrement remarquables en ce qu'ils ne génèrent pas de dépôt de type coking comparativement à un carburant contenant un sel d'ammonium quaternaire seul (carburant 7) ou une combinaison d'un sel d'ammonium quaternaire avec un dérivé de triazole différent de ceux couverts par la présente invention (carburants 8 et 9).

Le choix spécifique d'un composé A selon l'invention en combinaison avec un sel d'ammonium quaternaire et un dérivé de triazole tel que décrit ci-dessus (carburant 11) confère au carburant à la fois le contrôle des dépôts de type lacquering (dépôt IDID) et/ou une résistance au dépôt de type coking.

La composition d'additifs selon la présente invention est remarquable en ce qu'elle permet d'obtenir des carburants ayant des performances améliorées, en particulier pour les carburants gazoles à bas taux de soufre contenant éventuellement un biogazole. La combinaison d'additifs particulier décrite ci-dessus permet notamment de réduire la consommation de carburant des moteurs Diesel, en combinant un effet clean-up et keep-Clean, en minimisant la perte de puissance et en améliorant la résistance à l'usure dudit carburant.

## Revendications

1. Composition d'additifs pour carburant comprenant au moins :
- un premier additif comprenant au moins 50% en masse d'un composé A choisi parmi les esters partiels de sorbitan et d'hydrocarbures aliphatiques monocarboxyliques en C₄ à C₃₆, saturés ou insaturés, linaires ou ramifiés, cycliques ou acycliques, lesdits esters pouvant être pris seuls ou en mélange,
- un deuxième additif qui est un sel d'ammonium quaternaire obtenu par réaction d'un composé azoté comprenant une fonction amine tertiaire avec un agent de quaternarisation, ledit composé azoté étant le produit de la réaction d'un anhydride polyisobutényl-succinique et d'une amine de formule (I) ou (II) suivante : 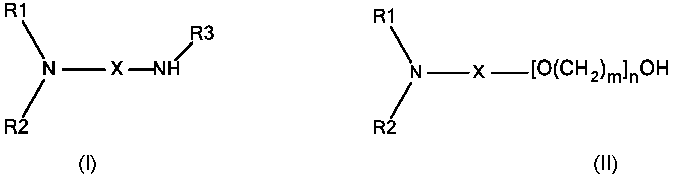 dans laquelle :
R1 et R2 sont identiques ou différents et représentent, indépendamment l'un de l'autre, un groupement alkyle ayant de 1 à 22 atomes de carbone ;
X est un groupement alkylène ayant de 1 à 20 atomes de carbone ;
m est un nombre entier compris entre 1 et 5 ;
n est un nombre entier compris entre 0 et 20 ; et
R3 est un atome d'hydrogène ou un groupement alkyle ayant de 1 à 22 atomes de carbone,
- avec un rapport massique entre le premier et le deuxième additif (premier deuxième) compris entre 10 :1 et 1 : 1 ; et
- un troisième additif qui est un dérivé de triazole de formule (V) suivante: 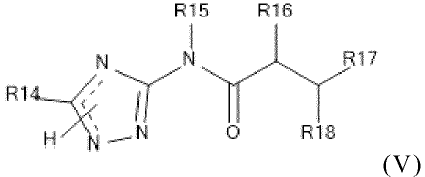 dans laquelle :
R14 est choisi parmi le groupe consistant en un atome d'hydrogène, un groupement hydrocarboné aliphatique en C1 à C8, linéaire ou ramifié, un groupement carboxyle (-CO₂H),
R15 et R18 sont identiques ou différents et représentent, indépendamment l'un de l'autre, un groupement choisi parmi le groupe consistant en un atome d'hydrogène et un groupement hydrocarboné aliphatique en C1 à C33, linéaire ou ramifié, saturé ou insaturé, comprenant éventuellement un ou plusieurs atomes d'oxygène sous forme de fonction carbonyle (-CO-) et/ou carboxyle (-CO₂H), lesdits groupements R15 et R18 formant éventuellement ensemble un cycle de 5 à 8 atomes comprenant l'azote auquel R15 est lié, étant entendu que dans ce cas R15 et R18 constituent alors un seul et même groupement hydrocarboné aliphatique en C1 à C33, linéaire ou ramifié, saturé ou insaturé, éventuellement substitué par un ou plusieurs atomes d'oxygène sous forme d'une fonction carbonyle (-CO-) et/ou carboxyle (-CO₂H),
R16 et R17 représentent respectivement un atome d'hydrogène et un groupement polyisobutylène ayant une masse moléculaire moyenne en nombre (Mn) comprise entre 200 et 3000, ou inversement,
- avec un rapport massique entre le deuxième et le troisième additif (deuxième : troisième) compris entre 1:10 et 10:1.

2. Composition selon la revendication 1, **caractérisée en ce que** le rapport massique entre le premier et le deuxième additif (premier : deuxième) est compris entre 5 : 1 et 1 : 1.

3. Composition selon l'une des revendications 1 et 2, **caractérisée en ce que** l'agent de quaternarisation est choisi parmi le groupe constitué par les dialkyle sulfates, les esters d'acide carboxylique, les halogénures d'alkyle, les halogénures de benzyle, les carbonates hydrocarbonés et les époxydes hydrocarbonés éventuellement en mélange avec un acide, seuls ou en mélange.

4. Composition selon l'une quelconque des revendications 1 à 3, **caractérisée en ce que** le composé A est choisi parmi les mono-, di- et tri-esters de sorbitan, pris seuls ou en mélange, plus préférentiellement les esters partiels de sorbitan comprenant plus de 40% massique de triesters de sorbitan.

5. Composition selon l'une quelconque des revendications 1 à 4, **caractérisée en ce que** le dérivé de triazole est représenté par la formule (VI) suivante : 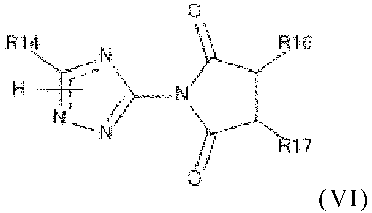 dans laquelle R14, R16 et R17 sont tels définis dans la revendication 1, ou par la formule (VII) suivante : 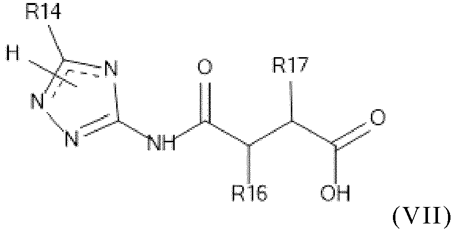 dans laquelle R14, R16 et R17 sont tels définis dans la revendication 1

6. Composition selon l'une quelconque des revendications 1 à 5, **caractérisée en ce que** le troisième additif comprend un mélange de dérivés de triazole de formules (VI) et (VII) tels que définis dans la revendication 5.

7. Composition selon l'une quelconque des revendications 1 à 6, **caractérisée en ce que** le dérivé de triazole est obtenu par réaction d'un aminotriazole de formule (VIII) avec un diacide de formule (IX) et/ou un anhydride succinique de formule (X) suivantes : 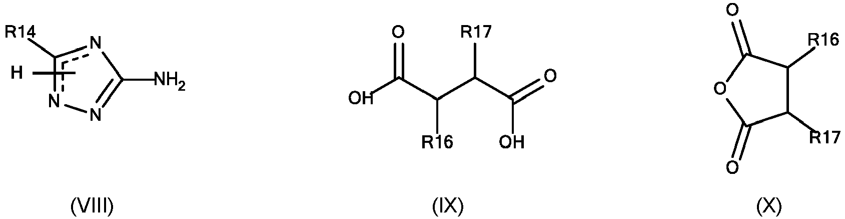 dans lesquelles R14, R16 et R17 sont tels que définis dans la revendication 1.

8. Utilisation d'une composition d'additifs telle que définie dans l'une quelconque des revendications 1 à 7, dans un carburant gazole ayant un taux de soufre inférieur ou égal à 500 ppm massiques, de préférence comprenant un biogazole.

9. Carburant gazole ayant un taux de soufre inférieur ou égal à 500 ppm massiques comprenant au moins 5 ppm massique d'une composition d'additifs telle que définie dans l'une quelconque des revendications 1 à 7.

10. Utilisation d'un carburant gazole tel que défini dans la revendication 9, dans un moteur Diesel, pour améliorer les performances dudit moteur.

11. Utilisation selon la revendication 10, pour limiter les dépôts dans ledit moteur Diesel.

12. Utilisation selon l'une des revendications 10 et 11, **caractérisée en ce que** le moteur est un moteur à injection directe, de préférence à système d'injection haute pression (« common-rail »).

13. Utilisation selon l'une quelconque des revendications 10 à 12, pour maintenir la propreté dudit moteur (action «keep-clean») en limitant les dépôts de savon et/ou de vernis dans les parties internes des systèmes d'injection dudit moteur et/ou pour nettoyer les parties internes encrassées du système d'injection dudit moteur, en éliminant au moins en partie les dépôts de savon et/ou de vernis dans lesdites parties internes (action curative «clean-up»).

## Patentansprüche

1. Zusammensetzung von Zusatzstoffen für Kraftstoff, umfassend mindestens:
- einen ersten Zusatzstoff, umfassend mindestens 50 Massen-% einer Verbindung A, die aus partiellen Sorbitanestern von gesättigten oder ungesättigten, geraden oder verzweigten, cyclischen oder acyclischen, aliphatischen C₄- bis C₃₆-Monocarbonsäurekohlenwasserstoffen ausgewählt ist, wobei die Ester allein oder im Gemisch genommen werden können,
- einen zweiten Zusatzstoff, der ein quartäres Ammoniumsalz ist, das durch Reaktion einer stickstoffhaltigen Verbindung, die eine tertiäre Aminfunktion umfasst, mit einem Quaternisierungsmittel erhalten wird, wobei die stickstoffhaltige Verbindung das Produkt der Reaktion eines Polyisobutenylbernsteinsäureanhydrids und eines Amins der folgenden Formel (I) oder (II) ist: 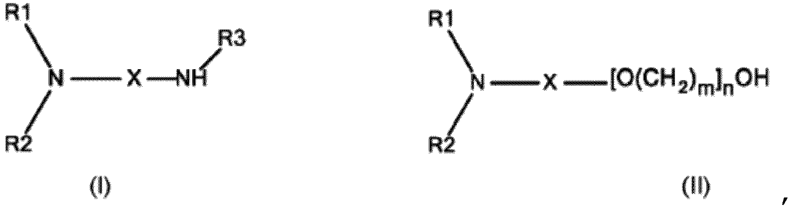 in der:
R1 und R2 gleich oder verschieden sind und unabhängig voneinander für eine Alkylgruppe mit 1 bis 22 Kohlenstoffatomen stehen;
X eine Alkylengruppe mit 1 bis 20 Kohlenstoffatomen ist;
m eine ganze Zahl ist, die zwischen 1 und 5 liegt;
n eine ganze Zahl ist, die zwischen 0 und 20 liegt; und
R3 ein Wasserstoffatom oder eine Alkylgruppe mit 1 bis 22 Kohlenstoffatomen ist,
- mit einem Massenverhältnis zwischen dem ersten und dem zweiten Zusatzstoff (erster:zweiter), das zwischen 10:1 und 1:1 liegt; und
- einen dritten Zusatzstoff, der ein Triazolderivat der folgenden Formel (V) ist: 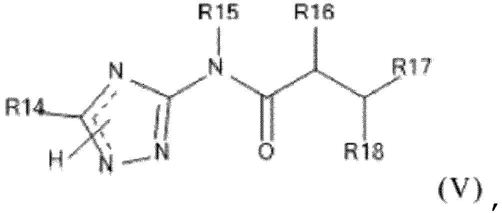 in der:
R14 aus der Gruppe bestehend aus einem Wasserstoffatom, einer geraden oder verzweigten, aliphatischen Cl- bis C8-Kohlenwasserstoffgruppe, einer Carboxylgruppe (-CO₂H) ausgewählt ist,
R15 und R18 gleich oder verschieden sind und unabhängig voneinander für eine Gruppe bestehend aus einem Wasserstoffatom und einer geraden oder verzweigten, gesättigten oder ungesättigten, aliphatischen Cl- bis C33-Kohlenwasserstoffgruppe stehen, gegebenenfalls umfassend ein oder mehrere Sauerstoffatome in der Form einer Carbonyl- (-CO-) und/oder Carboxylfunktion (-CO₂H), wobei die Gruppen R15 und R18 gegebenenfalls zusammen einen Zyklus von 5 bis 8 Atomen bilden, umfassend den Stickstoff, an den R15 gebunden ist, mit der Maßgabe, dass in diesem Fall R15 und R18 dann dieselbe gerade oder verzweigte, gesättigte oder ungesättigte, aliphatische Cl- bis C33-Kohlenwasserstoffgruppe bilden, die gegebenenfalls durch ein oder mehrere Sauerstoffatome in der Form einer Carbonyl- (-CO-) und/oder Carboxylfunktion (-CO₂H) substituiert ist,
R16 und R17 jeweils für ein Wasserstoffatom und eine Polyisobutylengruppe mit einer durchschnittlichen Molmasse (Mn), die zwischen 200 und 3000 liegt, oder umgekehrt stehen,
- mit einem Massenverhältnis zwischen dem zweiten und dem dritten Zusatzstoff (zweiter:dritter), das zwischen 1:10 und 10:1 liegt.

2. Zusammensetzung nach Anspruch 1, **dadurch gekennzeichnet, dass** das Massenverhältnis zwischen dem ersten und dem zweiten Zusatzstoff (erster:zweiter) zwischen 5:1 und 1:1 liegt.

3. Zusammensetzung nach einem der Ansprüche 1 und 2, **dadurch gekennzeichnet, dass** das Quaternisierungsmittel aus der Gruppe bestehend aus Dialkylsulfaten, Carbonsäureestern, Alkylhalogeniden, Benzylhalogeniden, Kohlenwasserstoffcarbonaten und Kohlenwasserstoffepoxiden, gegebenenfalls im Gemisch mit einer Säure, allein oder im Gemisch, ausgewählt ist.

4. Zusammensetzung nach einem der Ansprüche 1 bis 3, **dadurch gekennzeichnet, dass** die Verbindung A aus Sorbitanmono-, -di- und -triestern, allein oder im Gemisch genommen, besonders bevorzugt partiellen Sorbitanestern, umfassend mehr als 40 Massen-% Sorbitantriester, ausgewählt ist.

5. Zusammensetzung nach einem der Ansprüche 1 bis 4, **dadurch gekennzeichnet, dass** das Triazolderivat durch die folgende Formel (VI): 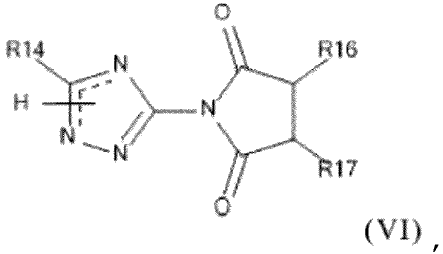 in der R14, R16 und R17 wie in Anspruch 1 definiert sind, oder durch die folgende Formel (VII) dargestellt wird: 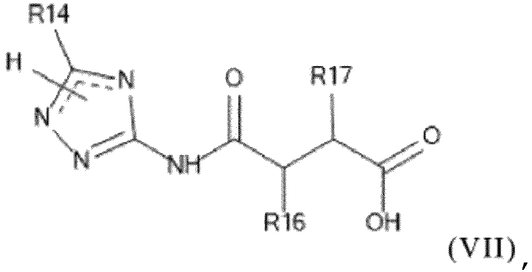 in der R14, R16 und R17 wie in Anspruch 1 definiert sind.

6. Zusammensetzung nach einem der Ansprüche 1 bis 5, **dadurch gekennzeichnet, dass** der dritte Zusatzstoff ein Gemisch von Triazolderivaten der Formeln (VI) und (VII), wie in Anspruch 5 definiert, umfasst.

7. Zusammensetzung nach einem der Ansprüche 1 bis 6, **dadurch gekennzeichnet, dass** das Triazolderivat durch Reaktion eines Aminotriazols der Formel (VIII) mit einer Disäure der folgenden Formel (IX) und/oder einem Bernsteinsäureanhydrid der folgenden Formel (X) erhalten wird: 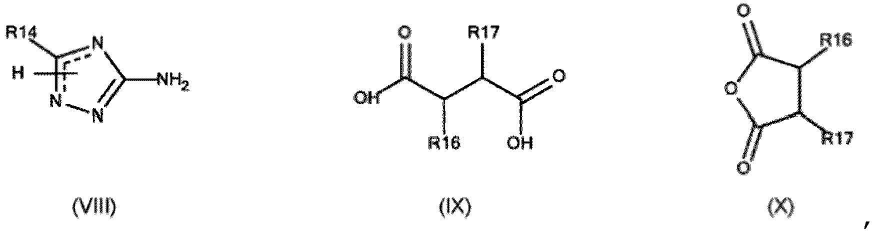 in denen R14, R16 und R17 wie in Anspruch 1 definiert sind.

8. Verwendung einer Zusammensetzung von Zusatzstoffen, wie in einem der Ansprüche 1 bis 7 definiert, in einem Dieselkraftstoff mit einem Schwefelgehalt, der kleiner als oder gleich 500 Massen-ppm ist, vorzugsweise umfassend einen Biodiesel.

9. Dieselkraftstoff mit einem Schwefelgehalt, der kleiner als oder gleich 500 Massen-ppm ist, umfassend mindestens 5 Massen-ppm einer Zusammensetzung von Zusatzstoffen, wie in einem der Ansprüche 1 bis 7 definiert.

10. Verwendung eines Dieselkraftstoffs, wie in Anspruch 9 definiert, in einem Dieselmotor zur Verbesserung der Leistungen des Motors.

11. Verwendung nach Anspruch 10 zur Einschränkung von Ablagerungen in dem Dieselmotor.

12. Verwendung nach einem der Ansprüche 10 und 11, **dadurch gekennzeichnet, dass** der Motor ein Motor mit Direkteinspritzung, vorzugsweise mit einem Hochdruckeinspritzsystem ("Common-Rail") ist.

13. Verwendung nach einem der Ansprüche 10 bis 12 zur Aufrechterhaltung der Sauberkeit des Motors ("Keep-clean"-Wirkung) durch Einschränken von Seife- und/oder Lackablagerungen in internen Teilen von Einspritzsystemen des Motors und/oder zum Reinigen der verschmutzten internen Teile des Einspritzsystems des Motors durch zumindest teilweises Entfernen der Seife- und/oder Lackablagerungen in den internen Teilen (behebende "Clean-up"-Wirkung) .

## Claims

1. Composition of additives for fuel comprising at least:
- a first additive comprising at least 50% by mass of a compound A selected from the partial esters of sorbitan and of saturated or unsaturated, linear or branched, cyclic or acyclic C₄ to C₃₆ monocarboxylic aliphatic hydrocarbons, said esters being used alone or in a mixture;
- a second additive which is a quaternary ammonium salt obtained by reaction of a nitrogen compound comprising a tertiary amine function with a quaternising agent, said nitrogen compound being the product of the reaction of a polyisobutenyl-succinic anhydride and an amine of the following formula (I) or (II): 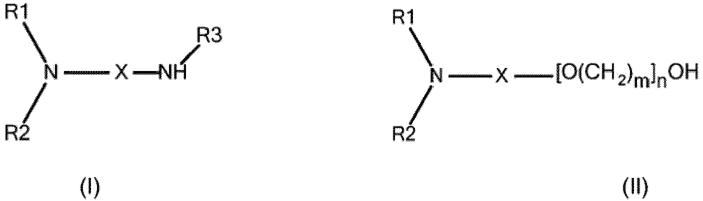 in which:
R1 and R2 are identical or different and represent,
independently of one another, an alkyl group having 1 to 22 carbon atoms;
X is an alkylene group having 1 to 20 carbon atoms;
m is an integer between 1 and 5;
n is an integer between 0 and 20 and
R3 is a hydrogen atom or an alkyl group having 1 to 22 carbon atoms,
- with a mass ratio between the first and the second additive (first:second) of between 10:1 and 1:1 and
- a third additive which is a derivative of triazole of following formula (V): 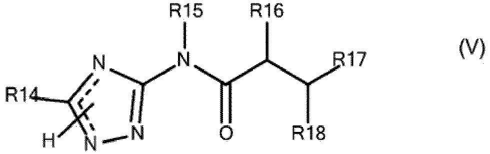 in which:
R14 is selected from the group consisting of a hydrogen atom, a linear or branched C1 to C8 aliphatic hydrocarbon group, a carboxyl group (-CO₂H),
R15 and R18 are identical or different and represent, independently of one another, a group selected from the group consisting of a hydrogen atom and a linear or branched, saturated or unsaturated C1 to C33 aliphatic hydrocarbon group, optionally comprising one or more oxygen atoms in the form of a carbonyl function (-CO-) and/or carboxyl function (-CO₂H), said groups R15 and R18 optionally forming together a ring with 5 to 8 atoms comprising nitrogen to which R15 is bound, it being understood that in this case R15 and R18 then consist of one linear or branched, saturated or unsaturated C1 to C33 aliphatic hydrocarbon group, optionally substituted with one or more oxygen atoms in the form of a carbonyl function (-CO-) and/or carboxyl function (-CO₂H),
R16 and R17 represent respectively a hydrogen atom and a polyisobutylene group having an average molecular mass in number (Mn) between 200 and 3000, or conversely, with a mass ratio between the second and the third additive (second:third) of between 1:10 and 10:1.

2. Composition according to claim 1, **characterised in that** the mass ratio between the first and the second additive (first:second) is between 5:1 and 1:1.

3. Composition according to any of claims 1 and 2, **characterised in that** the quaternising agent is selected from the group consisting of dialkyl sulphates, carboxylic acid esters, alkyl halides, benzyl halides, hydrocarbon carbonates and hydrocarbon epoxides optionally mixed with an acid, alone or in a mixture.

4. Composition according to any of claims 1 to 3, **characterised in that** the compound A is selected from sorbitan mono-, di- and tri-esters, taken alone or in a mixture, more preferably partial esters of sorbitan comprising more than 40% by mass of sorbitan triesters.

5. Composition according to any of claims 1 to 4, **characterised in that** the triazole derivative is represented by the following formula (VI): 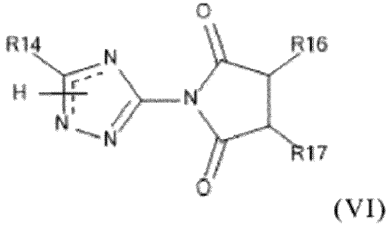 in which R14, R16 and R17 are as defined in claim 1, or by the following formula (VII): 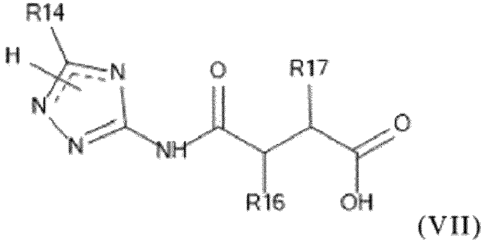 in which R14, R16 and R17 are as defined in claim 1.

6. Composition according to any of claims 1 to 5, **characterised in that** the third additive comprises a mixture of triazole derivatives of formulae (VI) and (VII) as defined in claim 5.

7. Composition according to any of claims 1 to 6, **characterised in that** the triazole derivative is obtained by reaction of an aminotriazole of formula (VIII) with a diacid of formula (IX) and/or a succinic anhydride of formula (X): 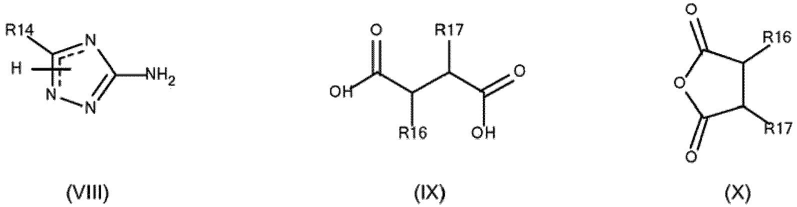 in which R14, R16 and R17 are as defined in claim 1.

8. Use of a composition of additives as defined in any of claims 1 to 7, in a diesel fuel having a sulphur content lower than or equal to 500 ppm by mass, preferably comprising a biodiesel.

9. Diesel fuel having a sulphur content less than or equal to 500 ppm by mass comprising at least 5 ppm by mass of a composition of additives as defined in any of claims 1 to 7.

10. Use of a diesel fuel as defined in claim 9 in a diesel engine for improving the performance of said engine.

11. Use according to claim 10, for limiting the deposits in said diesel engine.

12. Use according to any of claims 10 and 11, **characterised in that** the engine is a direct-injection engine, preferably a high-pressure injection system ("common rail").

13. Use according to any of claims 10 to 12, for maintaining the cleanliness of the engine ("keep-clean" effect) by limiting the deposits of soap and/or lacquer in internal components of injection systems of the engine and/or for cleaning fouled internal parts of the injection system of the engine, by removing, at least partly, deposits of soap and/or lacquer in said internal parts (curative "clean-up" effect).
